# EUROPEAN PATENT APPLICATION

(11) **EP 4 804 704 A1**
(43) Date of publication of application: **09.09.2026**
(21) Application number: 23957654.9
(22) Date of filing: 01.11.2023
(51) Int. Cl.: H04W 74/08, H04W 52/08, H04W 52/24

(54) **DEVICE**

(71) Applicant: NTT DOCOMO, INC., Tokyo 100-6150 (JP)
(72) Inventor: KUMAGAI, Shinya, Tokyo 100-6150 (JP); OKANO, Mayuko, Tokyo 100-6150 (JP); NAGATA, Satoshi, Tokyo 100-6150 (JP); SUN, Weiqi, Beijing 100190 (CN); WANG, Jing, Beijing 100190 (CN); CHEN, Lan, Beijing 100190 (CN)
(74) Representative: Hoffmann Eitle
(86) International application number: PCT/JP2023/039492
(87) International publication number: WO 2025/094326

(57) **Abstract**

Provided is a device that has a lower complexity than a Narrow Band-Internet of Things (NB-IoT) device, and that comprises: a control unit that executes a random access procedure; and a transmission unit that transmits a signal in the random access procedure by using the maximum transmission power of the device or a power obtained by adding path loss to the power received at a network node of the signal.

## Description

### Technical Field

The present disclosure relates to a device.

### Background Art

In New Radio (NR) (also referred to as "5G") that is a successor system of Long Term Evolution (LTE), a technology that satisfies a large-capacity system, a high data transmission speed, low delay, simultaneous connection of a large number of terminals, low cost, low power consumption, and the like as a requirement condition has been discussed (e.g., Non-Patent Literature (hereinafter, referred to as "NPL") 1).

Further, in Release 18 of 3GPP (registered trademark), Ambient Internet of Things (A-IoT) has been studied (e.g., NPL 2). In A-IoT, a device having an extremely simple configuration for a low-end IoT application that operates with extremely low power consumption is a target.

### Citation List

### Non-Patent Literature

NPL 1
   3GPP TS 38.300 V17.3.0 (2022-12)
NPL 2
   "Revised SID on Ambient IoT", RP-232404, 3GPP TSG RAN Meeting #101, September 2023
NPL 3
   3GPP TR 38.848 V1.0.0 (2023-09)
NPL 4
   3GPP TS 36.211 V16.7.0 (2021-09)
NPL 5
   3GPP TS 38.101-1 V18.2.0 (2023-06)
NPL 6
   3GPP TS 36.101 V18.2.0 (2023-06)

### Summary of Invention

However, no transmission power control in a random access procedure of an A-IoT device is specified. For this reason, there is a possibility that the random access procedure of an A-IoT device is not appropriately recognized in a network.

Further, in consideration of different power storage of different device types, it is assumed that the transmission power in the random access procedure for A-IoT devices differs in accordance with device types. For this reason, it is desired that a transmission resource for a random access signal is separated such that a device with lower power is not interfered by a device with higher power.

One aspect of the present disclosure is to provide a device that simplifies transmission power control. One aspect of the present disclosure provides a device that suppress interference of a random access transmission resource.

### Solution to Problem

A device according to one aspect of the present disclosure is a device having lower complexity than a Narrow Band-Internet of Things (NB-IoT) device, the device comprising: a control section that executes a random access procedure; and a transmission section that transmits a signal in the random access procedure, using a maximum transmission power of the device or a power resulting from addition of a path loss to a reception power of the signal in a network node.

A communication method according to one aspect of the present disclosure is a device having lower complexity than a Narrow Band-Internet of Things (NB-IoT) device, the device including: a control section that executes a random access procedure; and a transmission section that transmits a signal in the random access procedure, using a resource distinguished based on a device type of the device.

### Brief Description of Drawings

FIG. 1 is a diagram illustrating a configuration example of a radio communication system according to an embodiment;
FIG. 2 is a diagram for describing Topology 1;
FIG. 3 is a diagram for describing Topology 2;
FIG. 4 is a diagram for describing Topology 3 in downlink (DL) assistance;
FIG. 5 is a diagram for describing Topology 3 in uplink (UL) assistance;
FIG. 6 is a diagram for describing Topology 4;
FIG. 7 is a diagram for describing backscattering transmission;
FIG. 8 is a diagram for describing a 4-step RACH;
FIG. 9 is a diagram for describing a 2-step RACH;
FIG. 10 is a diagram for describing PCMAX;
FIG. 11 is a diagram for describing power classes;
FIG. 12 is a diagram for describing PCMAX;
FIG. 13 is a diagram for describing power classes;
FIG. 14 is a diagram for describing Proposal 2: Option 1;
FIG. 15 is a diagram for describing Proposal 2: Option 1;
FIG. 16 is a diagram for describing Proposal 2: Option 2;
FIG. 17 is a diagram for describing Proposal 2: Option 3;
FIG. 18 is a diagram for describing Proposal 2: Option 3;
FIG. 19 is a diagram for describing Proposal 2: Option 3;
FIG. 20 is a block diagram illustrating one example of a configuration of a base station according to the embodiment;
FIG. 21 is a block diagram illustrating one example of a configuration of a device according to the embodiment;
FIG. 22 is a diagram illustrating an example of a hardware configuration of the base station and the device according to the embodiment; and
FIG. 23 is a diagram illustrating a configuration example of a vehicle.

### Description of Embodiments

Hereinafter, an embodiment according to an aspect of the present disclosure will be described in detail with reference to the accompanying drawings. Note that the embodiment to be described below is merely an example, and an embodiment to which the present disclosure is applied is not limited to the embodiment below.

Existing techniques are used as appropriate for operations of a radio communication system in an embodiment of the present disclosure. Note that the existing techniques include, for example, existing LTE, but is not limited to existing LTE. Further, the term used in this specification, "LTE," has a broad meaning including LTE-Advanced and a system after LTE-Advanced (e.g., NR), unless otherwise specified.

Terms used in existing LTE, such as a synchronization signal (SS), a primary SS (PSS), a secondary SS (SSS), a physical broadcast channel (PBCH), a physical random access channel (PRACH), a physical downlink control channel (PDCCH), a physical downlink shared channel (PDSCH), a physical uplink control channel (PUCCH), and a physical uplink shared channel (PUSCH), are used in an embodiment of the present disclosure described below. This is for the sake of convenience in description, and the same signals, functions, and the like may be called by other names. Further, the above terms in NR correspond to NR-SS, NR-PSS, NR-SSS, NR-PBCH, NR-PRACH, and the like. Note that, even though the signal is used in NR, it is not necessarily explicitly referred to as "NR-".

Further, in the embodiment of the present disclosure, a duplex system may be a Time Division Duplex (TDD) system, a Frequency Division Duplex (FDD) system, or another system (e.g., Flexible Duplex or the like).

Furthermore, in an embodiment of the present disclosure, the term "configured" with respect to a radio parameter or the like may refer to a predetermined value being preconfigured, or it may refer to a radio parameter indicated from a base station or a terminal including a device being configured.

### <System Configuration>

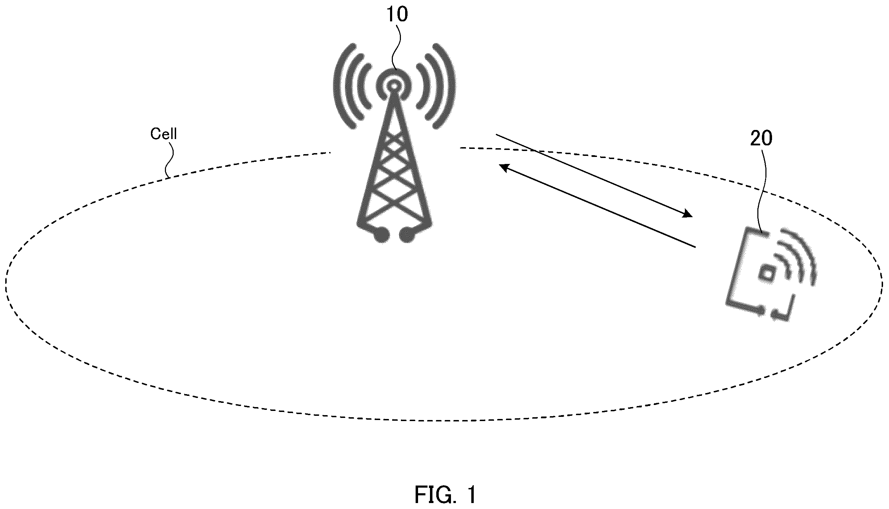

FIG. 1 is a diagram illustrating a configuration example of a radio communication system according to an embodiment. As illustrated in FIG. 1, the radio communication system includes base station 10 and device 20. Although FIG. 1 illustrates one base station 10 and one device 20, this is an example, and there may be a plurality of each. Device 20 may be an Ambient-IoT device.

Base station 10 is a communication apparatus that provides one or more cells and performs radio communication with device 20. Physical resources of the radio signal are defined in a time domain and a frequency domain. The time domain may be defined by the number of orthogonal frequency division multiplexing (OFDM) symbols. The frequency domain may be defined by the number of subcarriers or the number of resource blocks.

Base station 10 transmits a synchronization signal and system information to device 20. Base station 10 transmits a control signal and data to device 20 in downlink (DL). Base station 10 receives a control signal and data from device 20 in uplink (UL).

As will be described later, the radio communication system may include an intermediate node and/or an assisting node (see <Device Type and Topology> below). Hereinafter, "and/or" may be simply described as "/".

### <Ambient IoT>

In Rel-18 (Release-18), a study on Ambient-IoT (hereinafter, may be referred to as "A-IoT") that is even lower end than existing narrow band IoT (NB-IoT) (e.g., see section 10 of NPL 4) has been approved (e.g., see NPL 2). In A-IoT, an ultra-low power consumption and ultra-low complexity device is a target.

In A-IoT, for example, the following introduction scenarios and characteristics may be studied for related use cases.
· Indoor or outdoor environment
· Base station type, for example, macro/micro/pico cell-based deployment
· Topology related to connectivity, for example, which node among a base station, a terminal (UE), a relay, a repeater, and the like communicates with the A-IoT device
· Duplex method is TDD or FDD, and a frequency band is a licensed band or an unlicensed band
· Coexistence with UE and network equipment in frequency band for existing 3GPP technology
· Assumption of traffic of outgoing call from device and incoming call to device

For example, the following RAN design targets can be established based on the above-described introduction scenarios and characteristics.
· Power consumption
· Complexity
· Coverage
· Data rate
· Positioning accuracy

Based on the introduction scenarios suitable for the related use case, the feasibility of satisfying the design target is compared and evaluated, and a function to be supported is specified.

### <Device Type and Topology>

Based on the results of the study item, TR 38.848 (NPL 3) has been approved. In TR 38.848, A-IoT devices of the following categories are studied.

Device A: Device A has no power storage (energy storage) and no function of independent signal generation and signal amplification. Device A performs backscattering transmission.

Device B: Device B has power storage and has no function of independent signal generation. Device B performs backscattering transmission. Device B amplifies a reflected signal by using stored power.

Device C: Device C has power storage and has a function of independent signal generation. That is, device C has an active RF component for transmission.

It is assumed that the complexity of device A is about radio frequency identification (RFID).

In TR 38.848, Topologies 1 to 4 below are defined in an A-IoT network.

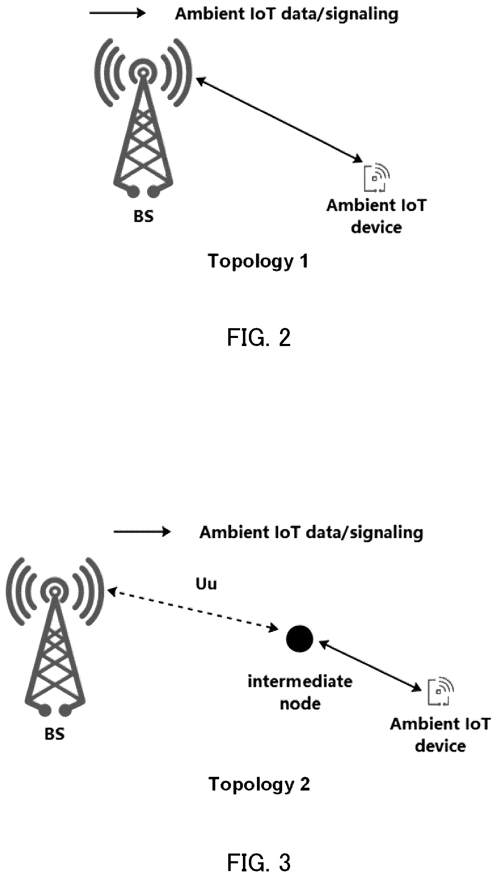

FIG. 2 is a diagram illustrating Topology 1. As illustrated in FIG. 2, Topology 1 is a configuration in which a base station (BS) and an A-IoT device communicate with each other. The A-IoT device directly executes bidirectional communication with the base station.

FIG. 3 is a diagram illustrating Topology 2. As illustrated in FIG. 3, Topology 2 is a configuration in which the base station and the A-IoT device communicate with each other via an intermediate node. The A-IoT device executes bidirectional communication with an intermediate node disposed between the base station and the A-IoT device. The intermediate node may be, for example, a relay, an integrated access and backhaul (IAB) node, a UE, a repeater, or the like.

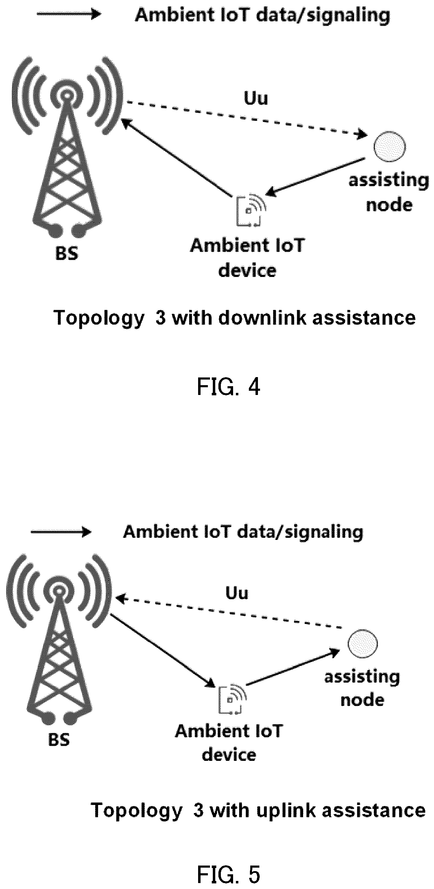

FIG. 4 is a diagram illustrating Topology 3 in DL assistance. As illustrated in FIG. 4, Topology 3 is a configuration including communication between the base station and an assisting node, communication between the assisting node and the A-IoT device, and communication between the A-IoT device and the base station.

The assisting node assists DL communication. For example, as illustrated in FIG. 4, the assisting node receives a DL signal from the base station and transmits the DL signal to the A-IoT device. As for the UL signal, the A-IoT device directly transmits to the base station.

FIG. 5 is a diagram illustrating Topology 3 in UL assistance. As illustrated in FIG. 5, Topology 3 is a configuration including communication between a base station and an assisting node, communication between the assisting node and an A-IoT device, and communication between the A-IoT device and the base station.

The assisting node assists UL communication. For example, as illustrated in FIG. 5, the assisting node receives the UL signal from the A-IoT device and transmits the UL signal to the base station. As for the DL signal, the A-IoT device directly receives from the base station.

The assisting node illustrated in FIGS. 4 and 5 may transmit a carrier wave for causing the A-IoT device to generate backscattering. The assisting node may be, for example, a relay, an IAB node, a UE, a repeater, or the like.

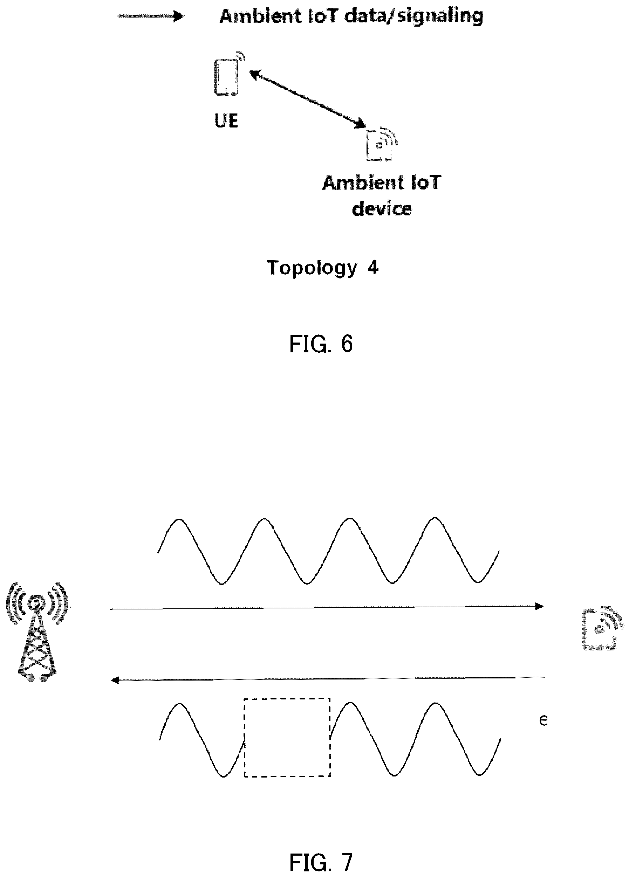

FIG. 6 is a diagram illustrating Topology 4. Topology 4 is a configuration in which a UE and an A-IoT device communicate with each other. The A-IoT device executes bidirectional communication with the UE. Topology 4 can also be regarded as sidelink (SL) communication.

In Topologies 1 to 4, a carrier wave may be provided to an A-IoT device from another node inside or outside the topology (see section 4.2.1 of NPL 3).

### <Backscattering Transmission>

The base station, the intermediate node, the assisting node, and another node transmit the RF signal to the A-IoT device. The A-IoT device is activated and obtains power from an RF operating field from the base station, the intermediate node, the assisting node, and another node via inductive coupling.

The A-IoT device modulates, in a backscattering manner, the RF signal received from the base station, the intermediate node, the assisting node, and another node, by switching a reflection coefficient of an antenna of the own device, and transmits information to the base station, the intermediate node, the assisting node, and another node.

FIG. 7 is a diagram illustrating backscattering transmission. FIG. 7 illustrates an example in which the A-IoT device performs On-Off keying to transmit information. A region surrounded by a broken line illustrated in FIG. 7 indicates an OFF interval and may correspond to "0" of the information (bit). A signal of a sine wave may correspond to "1" of the information.

Hereinafter, the network may include a base station, an assisting node, an intermediate node, and a terminal (UE of Topology 4). Hereinafter, the base station, the assisting node, the intermediate node, the relay, and the terminal may be referred to as a network node. The ambient IoT may be referred to as A-IoT.

### <Random Access in NR>

The terminal executes a random access procedure (RA procedure) to obtain initial access to the network. In NR, two types of RA procedures are supported: a 4-step RA type in which Messages (Msgs) 1 to 4 are exchanged, and a 2-step RA type in which MsgA and MsgB are exchanged.

### · 4-step RACH

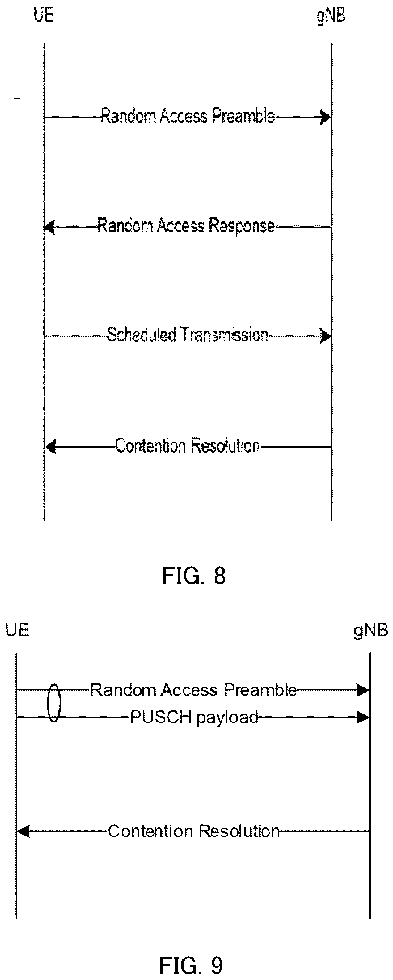

FIG. 8 is a diagram illustrating the 4-step RACH. Step 1: The terminal (UE) transmits an RA preamble (Msg1) to the base station (gNB). Msg1 of the 4-step RA type is configured by a preamble on PRACH.

Step 2: The terminal monitors a response from the network (PDCCH scheduling RAR and RAR (PDSCH)) in a set window (ra-ResponseWindow) after transmitting Msg1. In a case where the preamble index that matches the preamble index transmitted in Step 1 is included in the RAR (Msg2) of Step 2, the terminal considers that the RAR reception has been successful. RAR is an abbreviation for RA response.

Step 3: The terminal transmits Msg3 (PUSCH) based on the scheduling of the UL grant included in the response of Step 2, and monitors contention resolution (PDCCH that schedules Msg4, and Msg4 (PDSCH)). Msg3 includes a C-RNTI MAC CE or a CCCH SDU including a UE identity (UE ID). The C-RNTI is an abbreviation for Cell-Radio Network Temporary Identifier. The MAC CE is an abbreviation for Media Access Control Address Control Element. The CCCH is an abbreviation for Common Control Channel. The SDU is an abbreviation for Service Data Unit.

Step 4: The terminal considers that the contention resolution has been successful in a case where the C-RNTI MAC CE is transmitted in Msg3 and the PDCCH for the C-RNTI is received. Alternatively, the terminal considers that the contention resolution has been successful in a case where the CCCH SDU is transmitted in Msg3 and the UE contention resolution identity (ID) that matches the transmitted CCCH SDU is included in Msg4. Then, the terminal considers that the RA procedure has been normally completed.

### · Retransmission of Msg1

The terminal starts (configures) ra-ResponseWindow after transmitting Msg1. ra-ResponseWindow is configured by higher layer signaling such as RRC. ra-ResponseWindow may be regarded as a window (time or period) for monitoring a response (Msg2) from the base station.

The terminal executes the following operation in a case where the ra-ResponseWindow expires and the RAR reception is not successful in Step 2.
· Incrementing PREAMBLE_TRANSMISSION_COUNTER by 1
· Selecting a random backoff time
· Executing a random access resource selection procedure and retransmitting Msg1 after the random backoff time

The terminal performs the same procedure as described above in Step 4. The terminal starts (configures) a timer after transmitting Msg3. The timer is configured by higher layer signaling such as RRC. The timer may be regarded as a window (time or period) for monitoring a response (Msg4) from the base station.

The terminal executes the following operation in a case where the timer expires and the contention resolution in Step 4 is not successful.
· Incrementing PREAMBLE_TRANSMISSION_COUNTER by 1
· Selecting a random backoff time
· Executing a random access resource selection procedure and retransmitting Msg1 after the random backoff time
· 2-step RACH

FIG. 9 is a diagram illustrating the 2-step RACH. Step 1: The terminal transmits MsgA. MsgA includes a preamble on PRACH and a payload on PUSCH. MsgA includes a C-RNTI MAC CE or a CCCH SDU including a UE ID. MsgA may be regarded as a combination of Msg1 and Msg3 of the 4-step RACH.

Step 2: The terminal monitors a response (PDCCH that schedules MsgB and MsgB (PDSCH)) from the network within a configured window (timer) after transmitting MsgA. The terminal considers that the RA procedure has been normally completed in a case where the C-RNTI MAC CE is transmitted in MsgA and PDCCH for the C-RNTI is received. In other cases, the terminal considers that the RA procedure has been normally completed in a case where the CCCH SDU is transmitted in MsgA and the UE contention resolution ID that matches the transmitted CCCH SDU is included in MsgB.

### · Retransmission of MsgA

The terminal starts (configures) a timer after transmitting MsgA. The timer is configured by higher layer signaling such as RRC.

The terminal executes the following operation in a case where the timer expires, and the RA procedure is not normally completed in Step 2.
· Incrementing PREAMBLE_TRANSMISSION_COUNTER by 1
· Selecting a random backoff time
· Executing a random access resource selection procedure and retransmitting MsgA after the random backoff time

### <Random Access in NB-IoT>

The RA procedure of the NB-IoT is the same as the 4-step RACH of the NR. Step 1: The terminal (UE) of the NB-IoT transmits an RA preamble (Msg1) to the base station (gNB). Msg1 is configured by a preamble on NPRACH. NPRACH is an abbreviation for Narrowband PRACH.

Step 2: The terminal monitors a response (NPDCCH that schedules RAR and RAR (NPDSCH)) from the network within a configured window after transmitting Msg1. In a case where the preamble index that matches the preamble index transmitted in Step 1 is included in the RAR (Msg2) of Step 2, the terminal considers that the RAR reception has been successful. NPDCCH is an abbreviation for Narrowband PDCCH. NPDSCH is an abbreviation for Narrowband PDSCH.

Step 3: The terminal transmits Msg3 (NPUSCH) based on the scheduling of the UL grant included in the response of Step 2, and monitors contention resolution (NPDCCH that schedules Msg4 and Msg4 (NPDSCH)). Msg3 includes a C-RNTI MAC CE or a CCCH SDU including a UE ID. NPUSCH is an abbreviation for Narrowband PUSCH. C-RNTI is an abbreviation for Cell-Radio Network Temporary Identifier. MAC CE is an abbreviation for Media Access Control Address Control Element. CCCH is an abbreviation for Common Control Channel. SDU is an abbreviation for Service Data Unit.

Step 4: The terminal considers that the contention resolution has been successful in a case where the C-RNTI MAC CE is transmitted in Msg3 and the NPDCCH for the C-RNTI is received. Alternatively, the terminal considers that the contention resolution has been successful in a case where the CCCH SDU is transmitted in Msg3 and the UE contention resolution identity (ID) that matches the transmitted CCCH SDU is included in Msg4. Then, the terminal considers that the RA procedure has been normally completed.

In NB-IoT, the same retransmission of Msg1 as in NR is executed.

### <Random Access in A-IoT>

For initial access of A-IoT, a 4-step RA procedure, a 2-step RA procedure, or both the 4-step and 2-step RA procedures may be used.

### · Introduction of New Parameter

A new parameter is introduced for the RACH configuration of A-IoT. Since the A-IoT has ultra-low complexity and narrowband (e.g., the bandwidth is several subcarriers and may be less than a physical resource block (PRB)), some of the PRACH/NPRACH configurations of the NR or the NB-IoT may not be supported in the A-IoT.

A subset of the parameters of the PRACH configuration of the NR or the NPRACH configuration of the NB-IoT may be provided to the A-IoT. Alternatively, a subset of the PRACH configuration index in the PRACH configuration of the NR may be provided to the A-IoT.

### · 4-Step RA Procedure

Step 1 (Msg1): The A-IoT device transmits a preamble. The preamble (Msg1) may be composed of a preamble on a newly introduced PRACH.

Step 2 (Msg2): The A-IoT device monitors a response from the network node within a time window. The A-IoT device receives the response and considers that the response reception has been successful in a case where the received response includes a preamble index that matches the preamble transmission of Step 1. The response may additionally include a time/frequency resource used for the A-IoT device for transmission in Step 3.

Step 3 (Msg3): The A-IoT device transmits an identity (ID) of the A-IoT device. The ID of the A-IoT device may be a C-RNTI MAC CE or a CCCH SDU including a device ID (A-IoT ID).

Step 4 (Msg4): The A-IoT device monitors contention resolution information from the network node within a time window. In a case where the contention resolution information is addressed to the ID or the contention resolution information includes the ID transmitted by the A-IoT device in Step 3 (Msg3), the A-IoT device considers that the contention resolution has been successful, and the RA procedure has been successful.

### · 2-Step RA Procedure

Step A (MsgA): The A-IoT device transmits a preamble and an ID of the A-IoT device. The preamble may be composed of a preamble on a newly introduced PRACH.

Step B (MsgB): The A-IoT device monitors contention resolution information from the network node within a time window. In a case where the contention resolution information is addressed to the ID or the contention resolution information includes the ID transmitted by the A-IoT device in Step 1 (MsgA), the A-IoT device considers that the contention resolution has been successful, and the RA procedure has been successful.

In Step B, the A-IoT device may receive a fallback instruction from the network node. For example, in a case where the received response (MsgB) includes a preamble index that matches the preamble transmission in Step A, the A-IoT device may consider that the response has been normally received and execute Steps 3 and 4 of the 4-step RA procedure.

### · Time window

A period of the time window in Msg2/Msg4/MsgB of the RA procedure may be provided (configured) in DL information from the network node or may be fixed by the specification. The DL information may be, for example, information of higher layer signaling such as a master information block (MIB), a system information block (SIB), downlink control information (DCI), a MAC CE, or an RRC. The term "fixed" may be replaced with regulated or defined. The fixed may include pre-fixed.

### <PRACH Transmission Power in NR>

The terminal determines the transmission power of PRACH based on the following Expression (1).
[Expression 1] ${P}_{PRACH , b , f , c} \left(i\right) = min \left\{{P}_{CMAX , f , c}\left(i\right), {P}_{PRACH , target , f , c}+{PL}_{b , f , c}\right\}$

As indicated in Expression (1), the terminal adopts a smaller power of P_{CMAX} and power obtained by adding a path loss (PL_{b,f,c}) to a target power (P_{PRACH,target,f,c)} of PRACH, which will be described below, as the power of PRACH (RA).

P_{CMAX} in Expression (1) is "UE configured maximum transmission power", and the terminal controls the power of the PRACH within a range not exceeding P_{CMAX}. Hereinafter, P_{CMAX} may be referred to as PCMAX.

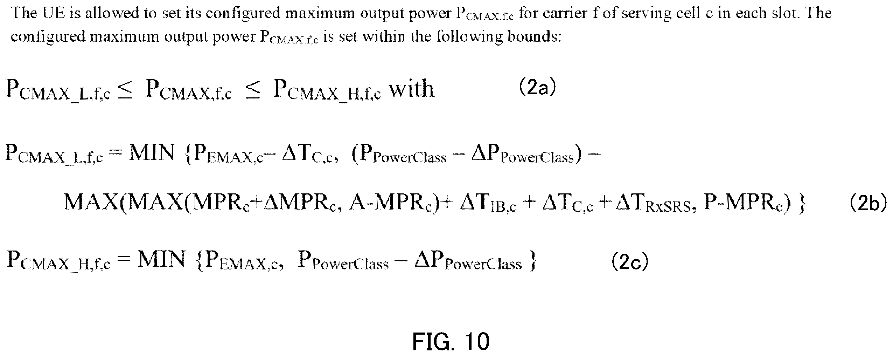

PCMAX is configured such that the transmission power of the terminal satisfies a requirement defined by the specification. PCMAX is represented by Expression (2a) in FIG. 10 and has an upper limit value and a lower limit value. The upper limit value is represented by Expression (2b) in FIG. 10, and the lower limit value is represented by Expression (2c) in FIG. 9 (Section 6.2.4 of NPL 5). The terminal configures PCMAX within a range of the upper limit value and the lower limit value represented by Expression (2b) and Expression (2c) and reports the set PCMAX to the network.

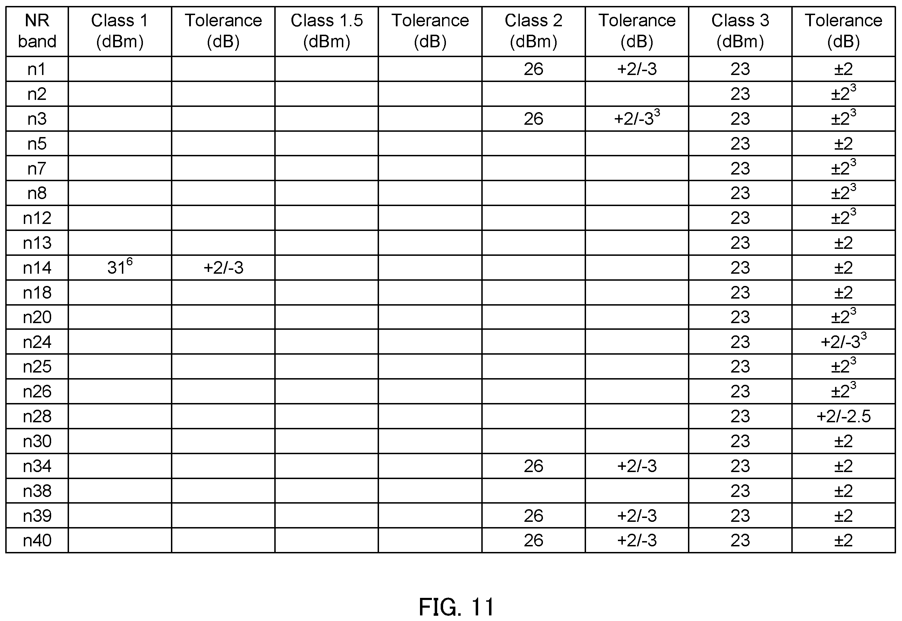

The upper limit value and the lower limit value include P_{PowerClass} and P_{EMAX} as indicated in Expression (2b) and Expression (2c). P_{PowerClass} is maximum UE output power defined in the specification. As indicated in FIG. 11, P_{PowerClass} is defined from Class 1 to Class 3 (Table 6.2.1-1 of NPL 5).

P_{EMAX} is provided from the network by a higher layer parameter. Accordingly, the network side can control the range of PCMAX configured by the terminal. Note that parameters other than P_{PowerClass} and P_{EMAX} included in Expression (2b) and Expression (2c) are related to power reduction that can be applied by the terminal. Hereinafter, P_{EMAX} may be referred to as PEMAX.

P_{PRACH,target,f,c} in Expression (1) is "PREAMBLE_RECEIVED_TARGET_POWER". "PREAMBLE_RECEIVED_TARGET_POWER" may be regarded as PRACH power (assumed to be received by base station) in the base station. "PREAMBLE_RECEIVED_TARGET_POWER" is represented by Expression (3).
[Expression 3] 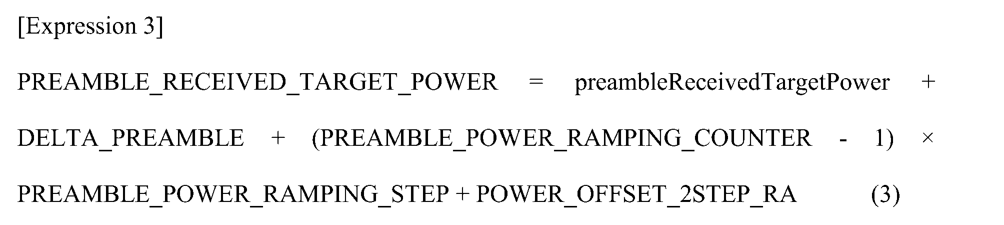 PREAMBLE_RECEIVED_TARGET_POWER = preambleReceivedTargetPower + DELTA_PREAMBLE + (PREAMBLE_POWER_RAMPING_COUNTER - 1) × PREAMBLE_POWER_RAMPING_STEP + POWER_OFFSET_2STEP_RA

"preambleReceivedTargetPower" in Expression (3) is provided by higher layer signaling such as RRC. "DELTA_PREAMBLE" is a pre-defined parameter and is determined based on a preamble format.

"PREAMBLE_POWER_RAMPING_COUNTER" in Expression (3) is increased by 1 each time the preamble is retransmitted. That is, the transmission power of PRACH can be increased each time PRACH is retransmitted. Note that the retransmission of the preamble means that PREAMBLE_TRANSMISSION_COUNTER is greater than 1 (for PREAMBLE_TRANSMISSION_COUNTER, see, for example, <Random Access in NR>).

"PREAMBLE_POWER_RAMPING_STEP" in Expression (3) is provided by higher layer signaling such as RRC. "POWER_OFFSET_2STEP_RA" is a parameter used in a case of switching from 2-step RACH to 4-step RACH.

PL_{b,f,c} in Expression (1) is a path loss. PL_{b,f,c} is calculated by the terminal based on DL transmission power provided by the network and DL reception power measured by the terminal.

### <NPRACH Transmission Power in NB-IoT>

In a case where enhanced random access power control is not applied, the terminal of NB-IoT determines the transmission power of NPRACH based on the following Expression (4) for the lowest repetition level. Further, in a case where the enhanced random access power control is applied, the terminal of the NB-IoT determines the transmission power of PRACH based on the following Expression (4) for all repetition levels.
[Expression 4] $\begin{matrix}PNPRACH = \\ min \left\{\begin{matrix}PCMAX , NARROWBAND_PREAMBLE_RECEIVED_TARGET_POWER + \\ PL\end{matrix}\right\} \left[dBm\right]\end{matrix}$

As indicated in Expression (4), the terminal adopts a smaller power of PCMAX and power obtained by adding a path loss (PL) to a target power (NARROWBAND_PREAMBLE_RECEIVED_TARGET_POWER) of NPRACH, which will be described below, as the power of NPRACH (RA).

PCMAX in Expression (4) is "UE configured maximum transmission power", and the terminal controls the power of NPRACH within a range not exceeding PCMAX.

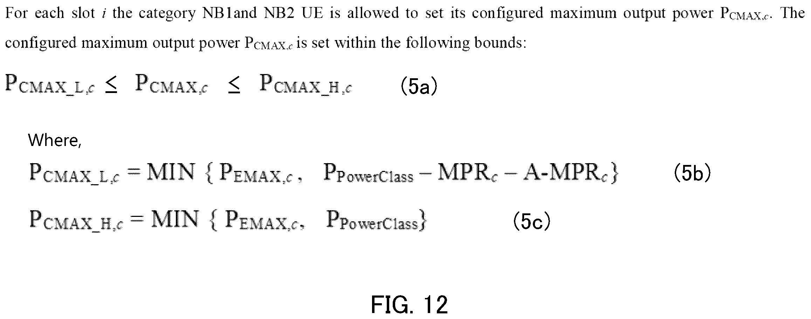

PCMAX is configured such that the transmission power of the NB-IoT device satisfies a requirement defined by the specification. PCMAX is represented by Expression (5a) in FIG. 12 and has an upper limit value and a lower limit value. The upper limit value is represented by Expression (5b) in FIG. 12, and the lower limit value is represented by Expression (5c) in FIG. 12 (Section 6.2.5F of NPL 6). The NB-IoT device configures PCMAX within a range of the upper limit value and the lower limit value represented by Expression (5b) and Expression (5c) and reports the configured PCMAX to the network.

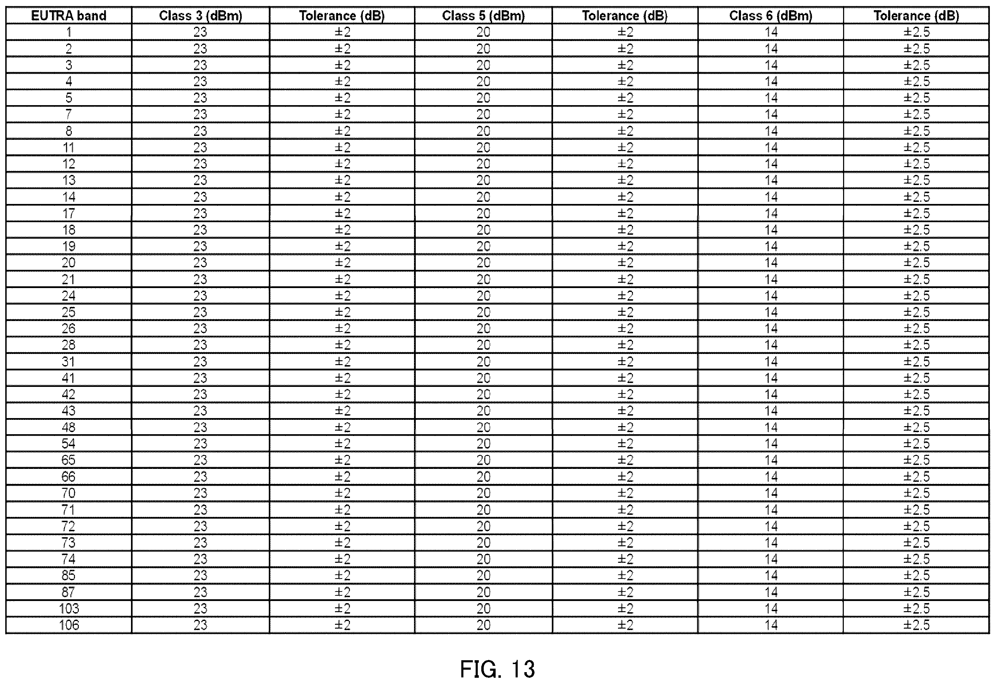

The upper limit value and the lower limit value include P_{PowerClass} and P_{EMAX} as indicated in Expression (5b) and Expression (5c). P_{PowerClass} is maximum UE output power defined by the specification. As indicated in FIG. 13, P_{PowerClass} is defined from Class 3 to Class 6 (see Table 6.2.2F-1 of NPL 6).

PEMAX is provided from the network by a higher layer parameter. Accordingly, the network side can control the range of PCMAX configured by the NB-IoT device. Note that the parameters other than P_{PowerClass} and P_{EMAX} included in Expression (5b) are related to power reduction that can be applied by the NB-IoT device.

PL in Expression (4) is a path loss. PL is calculated by the terminal based on DL transmission power provided by the network and DL reception power measured by the terminal.

"NARROWBAND_PREAMBLE_RECEIVED_TARGET_POWER" in Expression (4) may be regarded as NPRACH power (assumed to be received by base station) in the base station. "NARROWBAND_PREAMBLE_RECEIVED_TARGET_POWER" is different depending on the following Cases 1 to 3.

### · Case 1

In a case of the enhanced coverage level 0, "NARROWBAND_PREAMBLE_RECEIVED_TARGET_POWER" is represented by Expression (6).
[Expression 6] $\begin{matrix}PREAMBLE_RECEIVED_TARGET_POWER = \\ PREAMBLE_RECEIVED_TARGET_POWER - 10 ∗ \\ log 10 \left(numRepetitionPerPreambleAttempt\right)\end{matrix}$

"numRepetitionPerPreambleAttempt" in Expression (6) is configured by higher layer signaling such as RRC.

### · Case 2

In a case where the enhanced coverage level is not 0 and the starting enhanced coverage level is 0 or 1, "NARROWBAND_PREAMBLE_RECEIVED_TARGET_POWER" is represented by Expression (7).
[Expression 7] 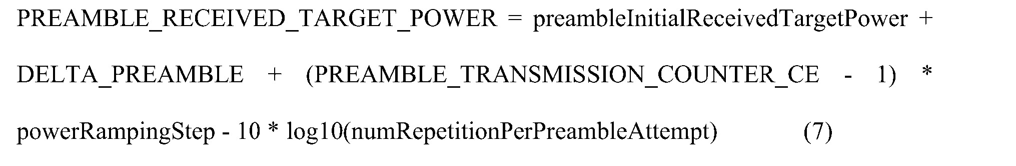 PREAMBLE_RECEIVED_TARGET_POWER = preambleInitialReceivedTargetPower + DELTA_PREAMBLE + (PREAMBLE_TRANSMISSION_COUNTER_CE - 1) * powerRampingStep - 10 * log10(numRepetitionPerPreambleAttempt)

### · Case 3

In a case where the enhanced coverage level is not 0 and the starting enhanced coverage level is not 0 or 1, "NARROWBAND_PREAMBLE_RECEIVED_TARGET_POWER" is represented by Expression (8).
[Expression 8] $PREAMBLE_RECEIVED_TARGET_POWER = max UE output power$

The "max UE output power" in Expression (8) is maximum UE output power.

In a case where the enhanced random access power control is not applied, the terminal of NB-IoT determines the transmission power of NPRACH based on the following Expression (9) for a repetition level other than the lowest repetition level.
[Expression 9]$PNPRANCH = PCAMX$

### <Analysis>

### · Analysis 1

In RA of the A-IoT device, there is no definition of the operation in a case where no response message from the network (network node), such as Msg2/Msg4/MsgB, is received. Therefore, in a case where the A-IoT device receives no response message from the network, for example, it is assumed that the A-IoT device cannot be connected to the network.

Therefore, in the present disclosure, in Proposal 1, a technology related to the operation of the A-IoT device in a case where no response message is received is provided.

### · Analysis 2

As described in <Device Type and Topology>, the A-IoT device of device A, B (device type A, B) does not have a function of generating a signal independently of the network node. Therefore, in a case where the network node is not in a situation of communicating with the A-IoT device, the A-IoT device of device type A, B cannot operate.

For example, in a case where the network node is not in a situation of receiving an uplink signal of the A-IoT device (situation in which a carrier wave is transmitted to cause the A-IoT device to perform backscattering transmission) or a situation of transmitting the downlink signal to the A-IoT device, the A-IoT device of device type A, B cannot operate because the power is not supplied from the network node.

However, the A-IoT device of device type A, B may need to operate even in a case where the network node is not in a situation of communicating with the A-IoT device. For example, the A-IoT device of device type A, B may measure time using hardware such as a timer independently without communicating with the network node.

Therefore, in the present disclosure, in Proposal 2, a technology related to the power supply from the network node to the A-IoT device is provided.

### · Analysis 3

The A-IoT device targets an IoT technology that relies on an ultra-low power and ultra-low complexity device for very low-end IoT applications. Therefore, in the A-IoT, a trigger of the RA procedure different from the UE-specific PDCCH order in NR and LTE is desired.

Therefore, in the present disclosure, in Proposal 3, a technology related to the trigger of the RA procedure in the A-IoT is provided.

### · Analysis 4

There is no definition of the control of the transmission power in the RA procedure of the A-IoT device. Therefore, the RA procedure of the A-IoT device may not be appropriately recognized in the network. For example, Msg1/MsgA of the A-IoT device may not be appropriately received in the network.

Therefore, in the present disclosure, in Proposal 4, a technology related to the power control in the RA procedure of the A-IoT device is provided.

### · Analysis 5

In consideration of different power storage of different device types, it is assumed that the transmission power in the RA procedure of the A-IoT device is different depending on the device type. Therefore, it is desired that the transmission resource of the RA signal is separated such that a device with lower power is not interfered with by a device with higher power.

Therefore, in the present disclosure, in Proposal 5, a technology related to the resource in the RA procedure of the A-IoT device is provided.

### <Proposal 1>

Proposal 1 relates to the operation of the A-IoT device in a case where the response message is not received from the network. Hereinafter, for Step 1 to Step 4, Step A, Step B, Msg1 to 4, MsgA, and MsgB in the RA of the A-IoT, see <Random Access in A-IoT> described above.

The A-IoT device starts (configures) timer-step2, timer-step4, or timer-stepB after transmitting Msg1, Msg3, or MsgA. The timer-step2, timer-step4, and timer-stepB may be regarded as a timer that measures time. The timer-step2, timer-step4, and timer-stepB may be referred to as a time window, a window, or a ra-ResponseWindow.

In a case where timer-step2, timer-step4, or timer-stepB expires and the A-IoT device does not receive Msg2, Msg4, or MsgB including the preamble index or the identity that matches the preamble index or the identity transmitted in Msg1, Msg3, or MsgA, it is considered that Step 2, Step 4, or Step B of the RA procedure has not been successful (has failed). Then, the A-IoT device retransmits Msg1 or MsgA.

For example, the A-IoT device starts timer-step2 after transmitting Msg1. In a case where the response reception in Step 2 is not successful until timer-step2 expires, the A-IoT device retransmits Msg1.

For example, the A-IoT device starts timer-step4 after transmitting Msg3. In a case where the contention resolution in Step 4 is not successful until timer-step4 expires, the A-IoT device retransmits Msg1.

For example, the A-IoT device starts timer-stepB after transmitting MsgA. In a case where the contention resolution in Step B is not successful until timer-stepB expires, the A-IoT device retransmits MsgA.

That is, the A-IoT device starts the timer after transmitting the request message (RA request message) related to the RA. The A-IoT device monitors the response message (RA response message) related to the RA and retransmits the request message related to the RA in a case where the response message is not successfully received until the timer expires (in a case where the response message is not normally received).

Note that the timer time of timer-step2, timer-step4, and timer-stepB may be provided from the network node by higher layer signaling such as RRC. Further, the timer time of timer-step2, timer-step4, and timer-stepB may be defined by the specification.

### <Proposal 1: Counter Operation>

The A-IoT device may generate a random value (e.g., X) as an initial value of the counter in order to avoid a collision of a preamble (PRACH). The A-IoT device may transmit the preamble after the counter is 0 (or X).

In a case where timer-step2, timer-step4, or timer-stepB expires and Msg1 or MsgA is retransmitted, the A-IoT device may determine the counter for avoiding the collision of the preamble based on the following Options 1 to 7. Note that, in the following options, the priority is different between the A-IoT device that executes the retransmission of Msg1/MsgA and the A-IoT device that executes the initial transmission of Msg1/MsgA with respect to the counter.

### <Proposal 1: Counter Operation: Option 1>

In the retransmission of Msg1 or MsgA, the A-IoT device considers the initial value of the counter to be 0 (or X). That is, in a case where the A-IoT device retransmits Msg1 or MsgA, the A-IoT device immediately starts the procedure (RA procedure) of the retransmission of Msg1 or MsgA.

### <Proposal 1: Counter Operation: Option 2>

In the retransmission of Msg1 or MsgA, the A-IoT device configures the same initial value as the initial transmission (or last transmission) of Msg1 or MsgA in the counter. After the counter is 0 (or X), the A-IoT device starts the procedure of the retransmission of Msg1 or MsgA.

### <Proposal 1: Counter Operation: Option 3>

In the retransmission of Msg1 or MsgA, the A-IoT device generates a random value (e.g., X) as the initial value of the counter. After the counter is 0 (or X), the A-IoT device starts the procedure of the retransmission of Msg1 or MsgA.

### <Proposal 1: Counter Operation: Option 4>

The A-IoT device sets a value indicated by the network or a value defined in the specification as the initial value of the counter in the retransmission of Msg1 or MsgA. After the counter is 0 (or X), the A-IoT device starts the procedure of the retransmission of Msg1 or MsgA.

### <Proposal 1: Counter Operation: Option 5>

The A-IoT device randomly selects and configures one of a plurality of values indicated by the network or a plurality of values defined by the specification as the initial value of the counter in the retransmission of Msg1 or MsgA. After the counter is 0 (or X), the A-IoT device starts the procedure of the retransmission of Msg1 or MsgA.

### <Proposal 1: Counter Operation: Option 6>

The A-IoT device selects and configures the maximum value of a plurality of values indicated by the network or a plurality of values defined by the specification as the initial value of the counter in the retransmission of Msg1 or MsgA. After the counter is 0 (or X), the A-IoT device starts the procedure of the retransmission of Msg1 or MsgA.

### <Proposal 1: Counter Operation: Option 7>

The A-IoT device configures a value corresponding to the number of retransmissions of Msg1 or MsgA as the initial value of the counter in the retransmission of Msg1 or MsgA. After the counter is 0 (or X), the A-IoT device starts the procedure of the retransmission of Msg1 or MsgA.

For example, the A-IoT device may configure the initial value of the counter to a smaller value as the number of retransmissions of Msg1 or MsgA increases. In this case, the A-IoT device can connect to the network early. Further, for example, the A-IoT device may configure the initial value of the counter to a larger value as the number of retransmissions of Msg1 or MsgA increases. In this case, the A-IoT device can reduce a collision of Msg1 or MsgA.

### <Proposal 1: Timer Operation>

The A-IoT device may generate timer-step1 or timer-stepA having a random duration in order to avoid a collision of a preamble (PRACH). The A-IoT device may transmit the preamble after timer-step1 or timer-stepA expires.

In a case where timer-step2, timer-step4, or timer-stepB expires and Msg1 or MsgA is retransmitted, the A-IoT device may determine timer-step1 or timer-stepA for avoiding the collision of the preamble based on the following Options 1 to 7. Note that, in the following options, the priority is different between the A-IoT device that executes the retransmission of Msg1/MsgA and the A-IoT device that executes the initial transmission of Msg1/MsgA with respect to timer-step1/timer-stepA.

### <Proposal 1: Timer Operation: Option 1>

In the retransmission of Msg1 or MsgA, the A-IoT device considers that timer-step1 or timer-stepA expires. That is, in a case where the A-IoT device retransmits Msg1 or MsgA, the A-IoT device immediately starts the procedure (RA procedure) of the retransmission of Msg1 or MsgA.

### <Proposal 1: Timer Operation: Option 2>

In the retransmission of Msg1 or MsgA, the A-IoT device configures the same period (duration) as the initial transmission (or last transmission) of Msg1 or MsgA in timer-step1 or timer-stepA. After timer-step1 or timer-stepA expires, the A-IoT device starts the procedure of the retransmission of Msg1 or MsgA.

### <Proposal 1: Timer Operation: Option 3>

In the retransmission of Msg1 or MsgA, the A-IoT device generates a random value as the period of timer-step1 or timer-stepA. After timer-step1 or timer-stepA expires, the A-IoT device starts the procedure of the retransmission of Msg1 or MsgA.

### <Proposal 1: Timer Operation: Option 4>

The A-IoT device configures a value indicated by the network or a value defined by the specification as the period of timer-step1 or timer-stepA in the retransmission of Msg1 or MsgA. After timer-step1 or timer-stepA expires, the A-IoT device starts the procedure of the retransmission of Msg1 or MsgA.

### <Proposal 1: Timer Operation: Option 5>

The A-IoT device randomly selects and configures one of a plurality of values indicated by the network or a plurality of values defined by the specification as the period of timer-step1 or timer-stepA in the retransmission of Msg1 or MsgA. After timer-step1 or timer-stepA expires, the A-IoT device starts the procedure of the retransmission of Msg1 or MsgA.

### <Proposal 1: Counter Operation: Option 6>

The A-IoT device selects and configures the maximum value of a plurality of values indicated by the network or a plurality of values defined by the specification as the period of timer-step1 or timer-stepA in the retransmission of Msg1 or MsgA. After timer-step1 or timer-stepA expires, the A-IoT device starts the procedure of the retransmission of Msg1 or MsgA.

### <Proposal 1: Counter Operation: Option 7>

The A-IoT device configures a value corresponding to the number of retransmissions of Msg1 or MsgA as the period of timer-step1 or timer-stepA in the retransmission of Msg1 or MsgA. After timer-step1 or timer-stepA expires, the A-IoT device starts the procedure of the retransmission of Msg1 or MsgA.

For example, the A-IoT device may configure the period of timer-step1 or timer-stepA to a smaller value as the number of retransmissions of Msg1 or MsgA increases. In this case, the A-IoT device can connect to the network early. Further, for example, the A-IoT device may set the period of timer-step1 or timer-stepA to a larger value as the number of retransmissions of Msg1 or MsgA increases. In this case, the A-IoT device can reduce the collision of Msg1 or MsgA.

### <Proposal 1: Summary>

After the A-IoT device transmits Msg1, Msg3, or MsgA, in a case where Msg2, Msg4, or MsgB is not normally received until a predetermined time elapses, the A-IoT device retransmits Msg1, Msg3, or MsgA. With this operation, the A-IoT device can connect to the network even in a case where Msg2, Msg4, or MsgB has not normally been received.

### <Proposal 2>

Proposal 2 relates to the power supply from the network node to the A-IoT device. In Proposal 2, the network node transmits an RF signal in order to operate the A-IoT device even in a case where the network node is not in a situation (state) of communicating with the A-IoT device. Hereinafter, Options 1 to 3 of the power supply of the network node will be provided.

### <Proposal 2: Option 1>

The A-IoT device of device type A needs to acquire power (energy) from the network node in order to maintain the operation of the timer (timer-step2, timer-step4, or timer-stepB) of Proposal 1. The network node continuously transmits the RF signal in a section in which the network node does not communicate with the A-IoT device in order to operate the timer of the A-IoT device of device type A.

Note that the operation of <Proposal 2: Option 1> may be extended to the A-IoT device of another device type. For example, the operation of <Proposal 2: Option 1> may be extended to the A-IoT device of device type B.

Further, the RF signal may be a signal of the same type as the carrier wave for backscattering transmission. For example, the RF signal may be a sine wave of a specific frequency. The specific frequency may be the same as the frequency of the carrier wave.

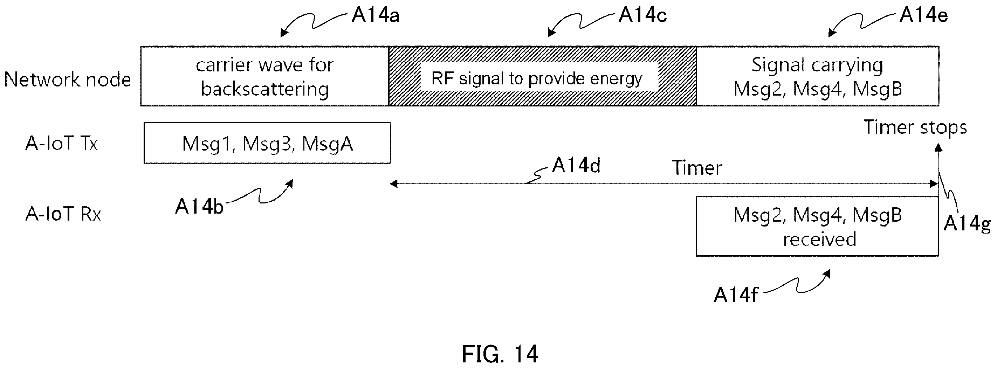

FIG. 14 is a diagram illustrating Proposal 2: Option 1. As indicated by arrow A14a, the network node transmits the carrier wave for the backscattering transmission of the A-IoT device. As indicated by arrow A14b, the A-IoT device transmits Msg1, Msg3, or MsgA based on the power of the carrier wave from the network node.

As described in Proposal 1, the A-IoT device starts the timer after transmitting Msg1, Msg3, or MsgA in order to monitor the response message such as Msg2, Msg4, or MsgB. As indicated by an arrow A14c, the network node supplies (transmits) the RF signal in order to operate the timer of the A-IoT device. As indicated by both arrows A14d, the A-IoT device operates the timer based on the power of the RF signal and a signal (signal indicated by arrow A14e) described below. The section (period) of the RF signal may be regarded as a section in which the network node does not communicate with the A-IoT device.

In a case where the reception of Msg1, Msg3, or MsgA from the A-IoT device is successful, the network node transmits a signal (DL signal) of the response message such as Msg2, Msg4, or MsgB to the A-IoT device as indicated by arrow A14e. As indicated by arrow A14f, the A-IoT device receives the response message such as Msg2, Msg4, or MsgB based on the power of the signal transmitted from the network node.

As indicated by arrow A14g, the A-IoT device stops the timer in a case where the reception of the response message is completed.

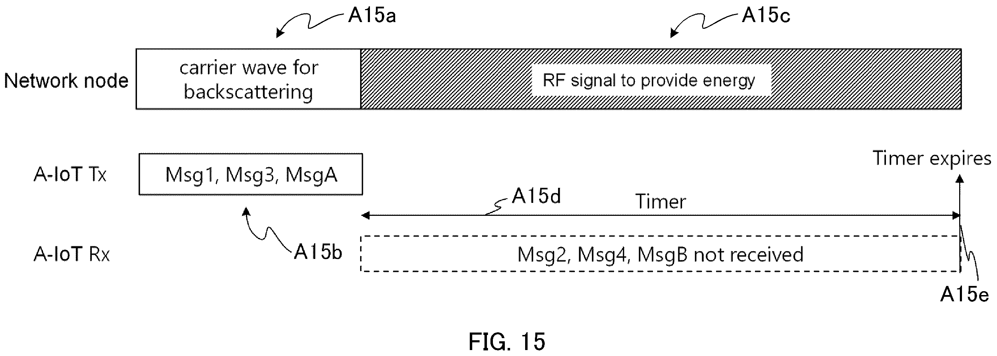

In FIG. 14, an operation example in a case where the network node is successful in receiving Msg1, Msg3, or MsgA from the A-IoT device has been described. In FIG. 15, an operation example in a case where the network node is not successful in receiving Msg1, Msg3, or MsgA from the A-IoT device will be described.

FIG. 15 is a diagram illustrating Proposal 2: Option 1. As indicated by arrow A15a, the network node transmits the carrier for the backscattering transmission of the A-IoT device. As indicated by arrow A15b, the A-IoT device transmits Msg1, Msg3, or MsgA based on the power of the carrier wave from the network node.

As described in Proposal 1, the A-IoT device starts the timer after transmitting Msg1, Msg3, or MsgA in order to monitor the response message such as Msg2, Msg4, or MsgB. As indicated by arrow A15c, the network node supplies (transmits) the RF signal in order to operate the timer of the A-IoT device. As indicated by both arrows A15d, the A-IoT device operates the timer based on the power of the RF signal.

As indicated by arrow A15e, the A-IoT device lets the timer expires without receiving the response message from the network node. In this case, the A-IoT device is regarded as not receiving the response message and starts the procedure of retransmitting Msg1 or MsgA (not illustrated).

As described in FIGS. 14 and 15, the network node transmits the RF signal for operating the timer for monitoring the response message to the A-IoT device even in a case where the network node is not in a situation of transmitting the DL signal to the A-IoT device (situation in which the A-IoT device performs backscattering transmission of Msg1, Msg3, or MsgA or situation in which the response message is transmitted to the A-IoT device). As a result, the A-IoT device can operate the timer and monitor the response message.

### <Proposal 2: Option 2>

The A-IoT device of device type A needs to acquire power (energy) from the network node in order to maintain the operation of the timer (excluding the timer of Proposal 1) or to maintain (manage or control) the time relationship. The network node continuously transmits the RF signal separately from the DL signal in order to operate the timer of the A-IoT device of device type A or to maintain the time relationship with the A-IoT device of device type A.

Note that the time relationship may be, for example, an offset between two signals or an offset between two operations. The time relationship may be indicated by the network node or may be defined by the specification.

Further, the operation of <Proposal 2: Option 2> may be extended to the A-IoT device of another device type. For example, the operation of <Proposal 2: Option 2> may be extended to the A-IoT device of device type B.

Further, the RF signal may be a signal of the same type as the carrier wave for backscattering transmission. For example, the RF signal may be a sine wave of a specific frequency. The specific frequency may be the same as the frequency of the carrier wave.

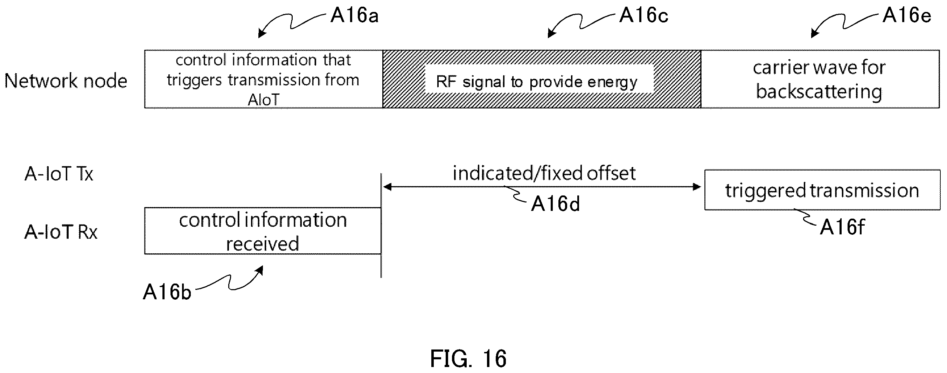

FIG. 16 is a diagram illustrating Proposal 2: Option 2. As indicated by arrow A16a, the network node transmits control information for triggering the transmission from the A-IoT device. As indicated by arrow A16b, the A-IoT device receives the control information (signal) based on the power of the control information from the network node.

In a case where the control information is received, the A-IoT device maintains the indicated or defined offset (time) and transmits the signal. As indicated by arrow A16c, the network node supplies (transmits) the RF signal to the A-IoT device in order to maintain the indicated or defined offset. As indicated by both arrows A16d, the A-IoT device maintains (measures) the offset time based on the power of the RF signal. The A-IoT device may measure the offset time by using the timer or the counter.

After the offset time, as indicated by arrow 16e, the network node transmits the carrier for backscattering transmission. After the offset time, as indicated by arrow 16f, the A-IoT device transmits the signal based on the carrier wave for backscattering transmission.

That is, the A-IoT device receives the control information for triggering the signal transmission, measures the indicated or defined offset time by using the timer or the counter, and transmits the signal after the offset time.

Note that the network node may continuously transmit the RF signal indicated by arrow A16c instead of the carrier wave for backscattering transmission indicated by arrow A16e. The A-IoT device may transmit the signal based on the power of the RF signal from the network node.

### <Proposal 2: Option 3>

In <Proposal 2: Option 1> and <Proposal 2: Option 2> described above, the RF signal is continuously supplied to the A-IoT device. In <Proposal 2: Option 3>, the A-IoT device is intermittently supplied with the RF signal (power) sufficient for the A-IoT device to operate. That is, in <Proposal 2: Option 3>, the RF signal has an on/off period. The network node transmits the intermittent RF signal to the A-IoT device and supplies the energy to the A-IoT device, for example, while the timer of the A-IoT device operates or while the A-IoT device maintains the time relationship.

The network node supplies sufficient energy for the A-IoT device to operate the timer or to maintain the time relationship, for example. The energy supply (transmission of the RF signal) may be performed only once at the start of the timer operation or at the start of the maintenance of the time relationship as long as the supply is sufficient.

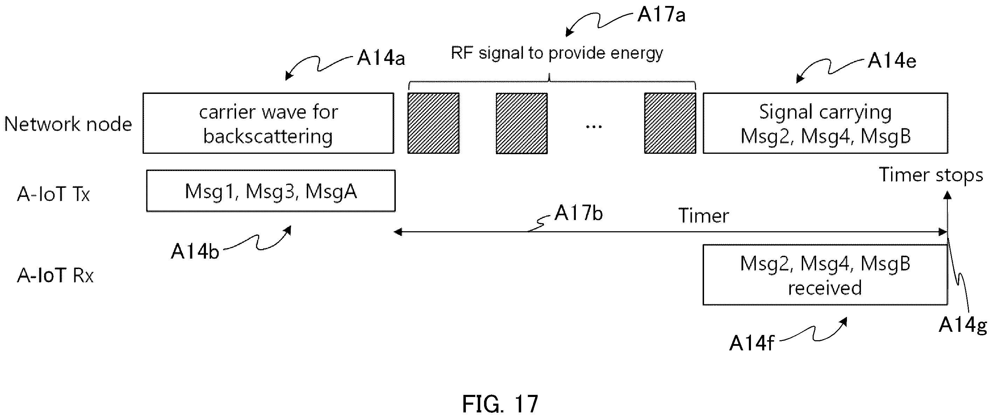

FIG. 17 is a diagram illustrating Proposal 2: Option 3. In FIG. 17, the same components as those in FIG. 14 are denoted by the same reference numerals. Hereinafter, different parts from FIG. 14 will be described.

As indicated by arrow A17a, the network node supplies (transmits) the intermittent RF signal in order to operate the timer of the A-IoT device. As indicated by both arrows A17b, the A-IoT device operates the timer based on the power of the intermittent RF signal and the power of the signal (signal indicated by arrow A14e) of the response message such as Msg2, Msg4, or MsgB.

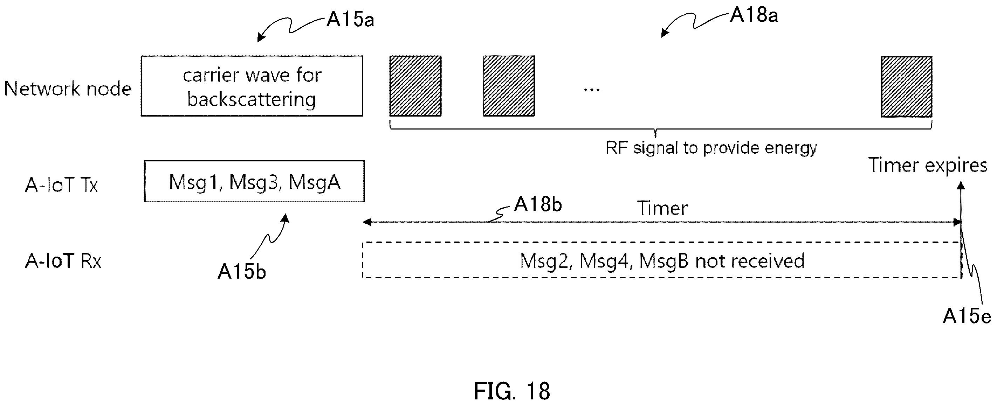

FIG. 18 is a diagram illustrating Proposal 2: Option 3. In FIG. 18, the same components as those in FIG. 15 are denoted by the same reference numerals. Hereinafter, different parts from FIG. 15 will be described.

As indicated by arrow A18a, the network node supplies (transmits) the intermittent RF signal in order to operate the timer of the A-IoT device. As indicated by both arrows A18b, the A-IoT device operates the timer based on the power of the intermittent RF signal.

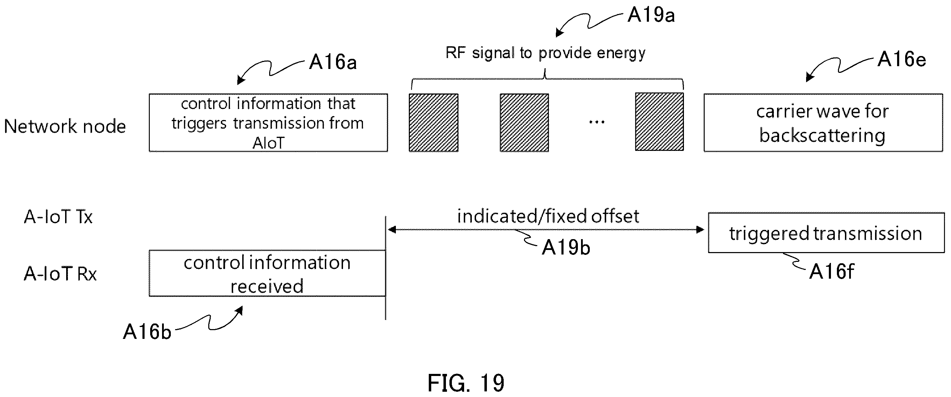

FIG. 19 is a diagram illustrating Proposal 2: Option 3. In FIG. 19, the same components as those in FIG. 16 are denoted by the same reference numerals. Hereinafter, different parts from FIG. 16 will be described.

As indicated by arrow A19a, the network node supplies (transmits) the intermittent RF signal to the A-IoT device in order to maintain the indicated or defined offset. As indicated by both arrows A19b, the A-IoT device maintains (measures) the offset (time) based on the power of the intermittent RF signal. The A-IoT device may measure the offset time by using the timer or the counter.

Note that the network node may continuously transmit the intermittent RF signal indicated by arrow A19a instead of the carrier wave for backscattering transmission indicated by arrow A16e. The A-IoT device may transmit the signal based on the power of the intermittent RF signal from the network node.

### <Proposal 2: Summary>

The network node transmits the RF signal for supplying the power to the A-IoT device in a section in which the network node does not communicate with the A-IoT device. With this operation, the A-IoT device can be supplied with the RF signal and can operate even in a case where the network node is not in a situation of communicating with the A-IoT device (situation of receiving the uplink signal or transmitting the downlink signal).

### <Proposal 3>

Proposal 3 relates to the trigger of the RA procedure in the A-IoT.

The A-IoT of the device type A does not include the power storage, and the UL transmission depends on the DL signal (including the carrier wave for backscattering transmission) from the network. In other words, in the A-IoT of device type A, the UL transmission cannot be started unless the DL signal from the network is received. Therefore, in the A-IoT of the device type A, the RA procedure can be triggered by the DL signal (DL triggered RA procedure).

Further, in the A-IoT of the device type A, in consideration of the fact that the UL transmission cannot be started unless the DL signal from the network is received, the DL trigger information (DL triggering information) in the DL triggered RA procedure may be cell-specific/group-specific, unlike PDCCH order in NR and LTE.

Therefore, in the A-IoT (regardless of device type A), the cell-common or group-common DL signal is introduced to trigger the RA procedure of the A-IoT device. The cell-common or group-common DL signal is a signal for triggering the RA procedure of the A-IoT device in units of cells or groups, and may be referred to as a DL trigger signal or an RA trigger signal.

The cell-common DL signal or the group-common DL signal is transmitted from the network node. For example, a cell-common identifier or a group-common identifier is addressed to the network node. The cell-common DL signal includes the cell-common identifier, and the group-common DL signal includes the group-common identifier. The A-IoT that has received the cell-common DL signal or the group-common DL signal executes, for example, the RA procedure in response to the trigger.

The following Options 1 to 6 are proposed regarding the reception of the cell-common DL signal or the group-common DL signal.

### <Proposal 3: Option 1>

All A-IoT devices that receive the cell-common DL signal or the group-common DL signal start the RA procedure.

### <Proposal 3: Option 2>

The A-IoT device does not execute the RA procedure even in a case where the cell-common DL signal or the group-common DL signal is received while the RA procedure is in progress. For example, the A-IoT device does not start the RA procedure in a case where the A-IoT device transmits Msg1/Msg3/MsgA and executes timer-step2/timer-step4/timer-stepB.

Another A-IoT device in which the RA procedure is not in progress execute the RA procedure. For example, the A-IoT device that has not transmitted Msg1/Msg3/MsgA and has not executed timer-step2/timer-step4/timer-stepB starts the RA procedure.

### <Proposal 3: Option 2: Variation>

The A-IoT device does not monitor the DL signal for triggering the RA procedure in a case where the RA procedure is in progress. For example, the A-IoT device does not monitor the cell-common DL signal or the group-common DL signal while the RA procedure is in progress. The RA procedure in progress may be rephrased as the RA procedure being executed, the RA procedure being in progress, or the RA procedure being executed.

### <Proposal 3: Option 3>

The RRC-CONNECTED, RRC-INACTIVE, and RRC-IDLE states of NR are reused. The A-IoT device executes the RA procedure based on the cell-common DL signal or the group-common DL signal and the RRC state.

For example, the A-IoT device does not execute the RA procedure even in a case where the cell-common DL signal or the group-common DL signal is received while the RRC state is the RRC-CONNECTED state.

For example, the A-IoT device does not execute the RA procedure even in a case where the cell-common DL signal or the group-common DL signal is received while the RRC state is the RRC-INACTIVE state.

For example, the A-IoT device executes the RA procedure in a case where the cell-common DL signal or the group-common DL signal is received while the RRC state is the RRC-IDLE state.

Note that the A-IoT device may execute the RA procedure in a case where he cell-common DL signal or the group-common DL signal is received while the RRC state is the RRC-INACTIVE state.

The RRC-CONNECTED is one of the RRC states of the terminal (A-IoT device), the terminal can be identified at the cell level in the base station, and the context of the terminal is held in the base station. The RRC-INACTIVE is one of the RRC states of the terminal, the terminal does not have the identification at the cell level in the base station, and the context of the terminal is held in the base station and the core network. The RRC-IDLE is one of the RRC states of the terminal, the terminal does not have the identification at the cell level in the base station, and the context of the terminal is not held in the base station. The context of the terminal is held in the core network.

### <Proposal 3: Option 3: Variation>

The A-IoT device does not monitor the cell-common DL signal or the group-common DL signal based on the RRC state.

For example, the A-IoT device does not monitor the cell-common DL signal or the group-common DL signal while the RRC state is the RRC-CONNECTED state.

For example, the A-IoT device does not monitor the cell-common DL signal or the group-common DL signal while the RRC state is the RRC-INACTIVE state.

For example, the A-IoT device monitors the cell-common DL signal or the group-common DL signal while the RRC state is the RRC-IDLE state.

Note that the A-IoT device may monitor the cell-common DL signal or the group-common DL signal while the RRC state is the RRC-INACTIVE state.

### <Proposal 3: Option 4>

A new state is introduced for the A-IoT. The state may represent whether the A-IoT device is already identified by the network.

For example, the A-IoT device that is identified by the network (e.g., the A-IoT device in a state Y) does not start the RA procedure.

For example, another A-IoT device that is not identified by the network (e.g., the A-IoT device in a state X) starts the RA procedure.

### <Proposal 3: Option 4: Variation>

The A-IoT device does not monitor the cell-common DL signal or the group-common DL signal based on the newly introduced state.

For example, the A-IoT device that is identified by the network (e.g., the A-IoT device in a state Y) does not monitor the cell-common DL signal or the group-common DL signal.

### <Proposal 3: Option 5>

Option 5 relates to the transition of the new state introduced in <Proposal 3: Option 4> described above. The following Options 5-1 and 5-2 are proposed regarding the transition of the new state. Hereinafter, a state in which the A-IoT device is not identified by the network is referred to as "state X". A state in which the A-IoT device is identified by the network is referred to as "state Y".

### <Proposal 3: Option 5: Option 5-1>

A technology for the transition to the "state Y" is proposed. The following Alt. 1 and Alt. 2 are proposed for the transition to the "state Y".

### <Proposal 3: Option 5: Option 5-1: Alt. 1>

The A-IoT device transitions to the "state Y" after successfully executing the RA procedure. For example, the A-IoT device transitions to the "state Y" when successfully executing Step 2, Step 4, or Step B.

### <Proposal 3: Option 5: Option 5-1: Alt. 2>

The A-IoT device transitions to the "state Y" in a case where specific DL information/DL signaling is received from the network node. That is, the A-IoT device transitions to the "state Y" in response to the instruction from the network node.

### <Proposal 3: Option 5: Option 5-2>

A technology for the transition to the "state X" is proposed. The following Alt. 1 to Alt. 5 are proposed for the transition to the "state X".

### <Proposal 3: Option 5: Option 5-2: Alt. 1>

The A-IoT device is in the "state X" by default. That is, the initial state of the A-IoT device is the "state X".

### <Proposal 3: Option 5: Option 5-2: Alt. 2>

The A-IoT device starts the timer (e.g., x seconds/milliseconds) or the counter after transitioning to the "state Y". The A-IoT device autonomously transitions to the "state X" after the timer expires or the counter is 0 (or Z). The initial values of the timer and the counter may be defined by the specification or may be indicated by the network node.

### <Proposal 3: Option 5: Option 5-2: Alt. 3>

The A-IoT device transitions to the "state X" in a case where specific DL information/DL signaling is received from the network node. That is, the A-IoT device transitions to the "state X" in response to the instruction from the network node.

### <Proposal 3: Option 5: Option 5-2: Alt. 4>

The A-IoT device transitions to the "state X" in a case where the cell switch is identified. That is, the A-IoT device transitions to the "state X" in a case where the cell is changed.

The A-IoT device transitions to the "state X" when detecting, for example, a new cell ID different from the previous cell ID. The cell ID may be carried by the DL information/DL signaling from the network node. The A-IoT device recognizes the cell change by decoding the DL information/DL signaling.

### <Proposal 3: Option 5: Option 5-2: Alt. 5>

The A-IoT device transitions to the "state X" in a case where the specific UL transmission with the specific message in the UL transmission is completed. The specific message may be a message for notifying the network of the completion of the data transmission from the A-IoT device. The specific UL transmission may be the UL signal transmitted first after the data transmission from the A-IoT device is completed, or may be the UL signal for which the data transmission from the A-IoT device is completed.

### <Proposal 3: Option 6>

The cell-common DL signal or the group-common DL signal may correspond to the control information indicated by arrows A16a and A16b in FIGS. 16 and 19 of <Proposal 2>. Msg1 or MsgA may correspond to the "triggered transmission" indicated by arrow A16f in FIGS. 16 and 19 of <Proposal 2>.

That is, the A-IoT device that has received the cell-common DL signal or the group-common DL signal receives the RF signal from the network node after receiving the cell-common DL signal or the group-common DL signal and maintains the offset. The A-IoT device starts the RA procedure and transmits Msg1 or MsgA after maintaining the offset.

### <Proposal 3: Summary>

The A-IoT device receives the cell-common DL signal for triggering the RA procedure of the A-IoT device in units of cells or the group-common DL signal for triggering the RA procedure of the A-IoT device in units of groups. With this operation, the A-IoT device can trigger the RA procedure in units of cells or groups.

### <Proposal 4>

Proposal 4 relates to the power control in the RA procedure of the A-IoT device. The following Options 1 to 4 are proposed regarding the transmission power in the RA procedure of the A-IoT device.

### <Proposal 4: Option 1>

The A-IoT device applies the maximum transmission power of the A-IoT device (maximal transmission power) to the transmission power of Msg1/MsgA (PRACH). The maximum transmission power may be determined based on, for example, the technology described in PCT/JP2023/033973.

### <Proposal 4: Option 2>

The A-IoT device may calculate (determine) the transmission power of Msg1/MsgA based on Expression (10) or Expression (11).
[Expression 10] ${P}_{MSG 1 / MSGA} = Ptarget + PL$
[Expression 11] ${P}_{MSG 1 / MSGA} = min \left\{Pmax, Ptarget+PL\right\}$

Here, PL included in Expression (10) and Expression (11) indicates a path loss. PL may be a fixed value for simplification of the configuration or the operation of the A-IoT device, may be provided by the network, or may be omitted. Further, the PL may be calculated by the A-IoT device based on the DL transmission power provided by the network and the DL reception power measured by the terminal.

Pₘₐₓ included in Expression (11) is the maximum transmission power of the A-IoT device. The maximum transmission power may be determined based on, for example, the technology described in PCT/JP2023/033973.

Ptarget included in Expression (10) and Expression (11) may be regarded as the power of Msg1/MsgA (assumed to be received by the network node) in the network node.

That is, the A-IoT device transmits Msg1/MsgA by using the power obtained by adding the path loss to the power (reception power) of Msg1/MsgA in the network node (Expression (10)). Alternatively, the A-IoT device transmits Msg1/MsgA by using a smaller power of the maximum transmission power Pₘₐₓ of the A-IoT device and the power determined by Expression (10) (Expression (11)).

Ptarget included in Expression (10) and Expression (11) is calculated based on Expression (12).
[Expression 12] 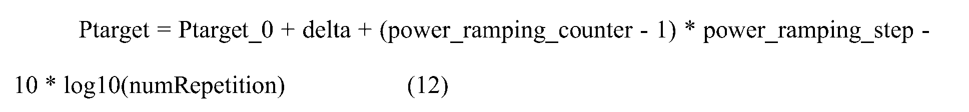 Ptarget = Ptarget_0 + delta + (power_ramping_counter - 1) * power_ramping_step - 10 * log10(numRepetition)

Here, Ptarget_0 included in Expression (12) is provided by the network. delta is determined based on the preamble format.

The initial value of power_ramping_counter included in Expression (12) is configured to, for example, 1. The power_ramping_counter is incremented by 1 each time the A-IoT device executes the retransmission of Msg1 or MsgA.

The power_ramping_step included in Expression (12) indicates a width of the power ramping and is provided by the network. The numRepetition indicates the number of repetitions of the transmission of Msg1 or MsgA in a case where the repetition of the transmission of Msg1 or MsgA is supported.

That is, according to Expression (12), the transmission power of the RA procedure in the A-IoT can be increased stepwise in accordance with the number of retransmissions of Msg1 or MsgA. Further, the transmission power of the RA procedure in the A-IoT can be reduced in accordance with the number of repetitions in a case where the repetition is supported.

Note that Ptarget_0 included in Expression (12) may be a fixed value for simplification of the configuration or the operation of the A-IoT device. Delta may be omitted in a case where only one preamble format is supported. Further, the term related to the repetition, that is, 10 * log10(numRepetition) included in Expression (12) may be omitted in a case where the repetition is not supported or the transmission power is not affected by the repetition.

### <Proposal 4: Option 3>

Regarding the power ramping, the following simplifications in Alt. 1 to Alt. 3 are considered.

### <Proposal 4: Option 3: Alt. 1>

In a case where the power ramping is not supported, the term related to the power ramping, that is, (power_ramping_counter - 1) * power_ramping_step included in Expression (12) may be omitted. This means that the transmission power is not affected by the initial transmission or retransmission of Msg1 or MsgA.

### <Proposal 4: Option 3: Alt. 2>

The power_ramping_step included in Expression (12) may be a fixed value.

### <Proposal 4: Option 3: Alt. 3>

The term (value) related to the power ramping is determined in accordance with whether the transmission of Msg1 or MsgA is the initial transmission or retransmission. For example, (power_ramping_counter - 1) * power_ramping_step included in Expression (12) is replaced with retransmission_flag * power_ramping_step. The retransmission_flag indicates whether the transmission of Msg1 or MsgA is the initial transmission or retransmission.

The above-described replacement means that the power ramping can take two states in accordance with whether the transmission is the initial transmission or retransmission. Further, it means that the term of the power ramping is simplified.

For example, in a case where the transmission of Msg1 or MsgA is the initial transmission, "retransmission_flag = 0" is established. For example, in a case where the transmission of Msg1 or MsgA is the retransmission, "retransmission_flag = 1" is established.

### <Proposal 4: Option 4>

In device type B, the amplifying gain can be controlled instead of the transmission power (e.g., see PCT/JP2023/033973). The following Alt. 1 to Alt. 3 are provided regarding the amplifying gain in the transmission of Msg1 or MsgA.

### <Proposal 4: Option 4: Alt. 1>

The A-IoT device always uses the maximal amplifying gain in the RA procedure.

### <Proposal 4: Option 4: Alt. 2>

The A-IoT device determines the amplifying gain in the RA procedure in accordance with whether the transmission is the initial transmission or retransmission. For example, in a case where the transmission of Msg1 or MsgA is the initial transmission, the A-IoT device configures the amplifying gain to X0. In a case where the transmission of Msg1 or MsgA is the retransmission, the A-IoT device configures the amplifying gain to X1. X1 may be larger than X0, for example, so that the reception of Msg1 or MsgA in the network node in the retransmission is more likely to be successful than the reception of Msg1 or MsgA in the initial transmission.

### <Proposal 4: Option 4: Alt. 3>

The A-IoT device determines the amplifying gain in accordance with the number of retransmissions of Msg1 or MsgA. The amplifying gain may be determined based on Expression (13) or Expression (14).
[Expression 13] $amplifying gain = \left(gain_ramping_counter-1\right) * gain_ramping_step$
[Expression 14] $\begin{matrix}amplifying gain = \\ min \left\{gain_max, \left(gain_ramping_counter-1\right)*gain_ramping_step\right\}\end{matrix}$

The initial value of gain_ramping_counter included in Expression (13) and Expression (14) is configured to, for example, 1. The gain_ramping_counter is incremented by 1 each time the A-IoT device executes the retransmission of Msg1 or MsgA.

The gain_ramping_step may be a fixed value or may be indicated by the network. gain_max is a maximum value of the amplifying gain supported by the A-IoT device.

That is, according to Expression (13) and Expression (14), the amplifying gain in the A-IoT device can be increased stepwise in accordance with the retransmission of Msg1 or MsgA.

Note that the amplifying gain may also change in accordance with the number of repetitions of the transmission of Msg1 or MsgA, as in the transmission power of Msg1/MsgA described in <Proposal 4: Option 2>. For example, (gain_ramping_counter - 1) * gain_ramping_step included in Expression (13) and Expression (14) may be replaced with (gain_ramping_counter - 1) * gain_ramping_step - 10 * log10(numRepetition).

### <Proposal 4: Others>

Since the A-IoT device of device type A does not have the power storage, the A-IoT device may not support the function of the power control.

The <Proposal 4: Option 2> described above can be suitable for the A-IoT device of device type C as a simplification of the power control solution for NR or NB-IoT.

The A-IoT device of device type B may support the power control, but may not support the measurement of the reception intensity of the DL signal, such as a reference signal received power (RSRP). Therefore, the A-IoT device of device type B may not support the component "path loss". Alternatively, the component "path loss" can be estimated only by the network, and the network can estimate the path loss based on the measurement of the reflected signal from the A-IoT device.

### <Proposal 4: Summary>

The A-IoT device transmits Msg1/MsgA in the RA procedure by using the maximum transmission power of the A-IoT device or the power obtained by adding the path loss to the reception power of the network node of Msg1/MsgA. With this operation, the RA procedure of the A-IoT device can be appropriately recognized in the network.

### <Proposal 5>

Proposal 5 relates to a resource in the RA procedure of the A-IoT device.

The transmission resource for a random access signal of different device types is separated for each device type such that the device with lower power is not interfered with by the device with higher power. The following Options 1 and 2 are provided for a method of separating the transmission (transmission resource) of Msg1/Msg3/MsgA of the A-IoT device of the different device types.

### <Proposal 5: Option 1>

An individual time/frequency resource is used for the transmission of Msg1/Msg3/MsgA of the different device types. In other words, the same time/frequency resource is used for the transmission of the same device type of Msg1/Msg3/MsgA.

For example, the A-IoT device of device type A transmits Msg1/Msg3/MsgA by using a first time/frequency resource. The A-IoT device of device type B transmits Msg1/Msg3/MsgA by using a second time/frequency resource. The A-IoT device of device type C transmits Msg1/Msg3/MsgA by using a third time/frequency resource.

The individual time/frequency resource (information) may be provided by the network or may be defined by the specification.

Note that, in the transmission of Msg1/Msg3/MsgA of device types B and C, an individual time/frequency resource may be further used in consideration of the power storage of device types B and C, in accordance with the stored amount of energy (electric power amount).

### <Proposal 5: Option 2>

An identifier different for each device type is used in the DL signal for triggering the RA procedure.

For example, an identifier different for each device type is used in the DL signal (cell-common DL signal or group-common DL signal) from the network node addressed by the cell-common identifier or the group-common identifier (see Proposal 3). The A-IoT device of each device type starts the RA procedure based on the identifier used (included) in the DL signal. For example, in a case where the identifier indicating device type A is included in the DL signal, the A-IoT device of device type A among the A-IoT devices of device types A, B, and C starts the RA procedure.

Note that, in consideration of the power storage accumulation of device types B and C, different identifiers may be used for the transmission of Msg1/Msg3/MsgA in accordance with the amount of energy stored in the device.

### <Proposal 5: Summary>

The A-IoT device transmits Msg1/Msg3/MsgA in the RA procedure by using the resource distinguished based on the device type of A-IoT device. With this operation, the resource of Msg1/Msg3/MsgA can be separated such that the device with lower power is not interfered with by the device with higher power.

### <Capability>

The A-IoT device may report the following capability information (A-IoT capability) to the base station, the intermediate node, the assisting node, and the terminal.

### · Device type of A-IoT

The intermediate node, the assisting node, and the terminal may report the following capability information to the base station and the A-IoT device.
- Information on whether to support communication with an A-IoT device
- Device type of A-IoT to be supported

### <Others>

All or some of the device types may be applied to each of the above-described proposals and options. Alternatively, different proposals and options may be applied to different device types.

Each of the above-described proposals and options may be applied in a case where the A-IoT device, the intermediate node, and the assisting node support the corresponding proposal and option or in a case where the corresponding proposal and option are enabled by higher layer signaling.

The A-IoT device may be referred to as an A-IoT UE, an A-IoT terminal, an A-IoT node, a terminal, or a communication apparatus. Further, the A-IoT device may be simply referred to as an A-IoT.

The A-IoT device may be regarded as a device having lower complexity than the NB-IoT device. The complexity may be regarded as, for example, complexity of a configuration/structure related to a minimum/maximum transmission/reception bandwidth supported by the device and/or a maximum DL/UL data rate supported by the device and/or a maximum DL/UL transport block (TB) size supported by the device and/or a Layer 2 buffer size. The configuration/structure may be replaced with hardware. TB is an abbreviation for Transport Block.

The base station, the intermediate node, the assisting node, and the terminal (UE of Topology 4) may be referred to as an A-IoT base station, an A-IoT parent node, an A-IoT NB, a base station, or a communication apparatus.

### <Configuration of Base Station>

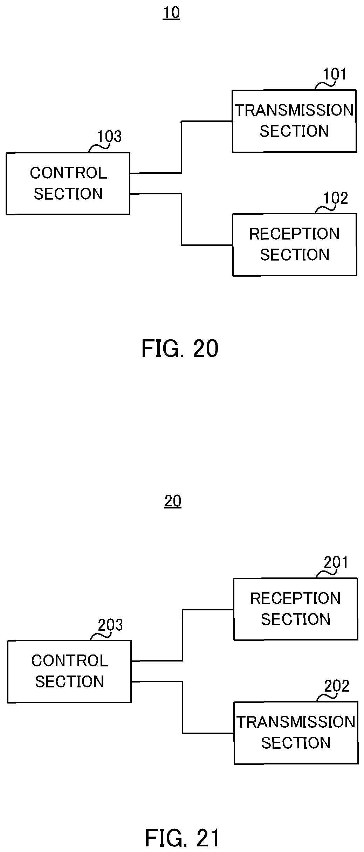

FIG. 20 is a block diagram illustrating one example of a configuration of base station 10 according to the embodiment. Base station 10 includes, for example, transmission section 101, reception section 102, and control section 103. Base station 10 communicates with device 20 (see FIG. 21) via radio. Base station 10 may be an intermediate node, an assisting node, or a terminal (a terminal of SL that communicates with device 20).

Transmission section 101 transmits a downlink (DL) signal to device 20. For example, transmission section 101 transmits the DL signal under the control of control section 103.

The DL signal may include, for example, a downlink data signal and control information (e.g., Downlink Control Information (DCI)). The DL signal may also include information (e.g., UL grant) indicating scheduling related to signal transmission of device 20. Moreover, the DL signal may include higher layer control information (e.g., Radio Resource Control (RRC) control information). Furthermore, the DL signal may include a reference signal.

Channels used for DL signal transmission include, for example, data channels and control channels. For example, the data channels may include a Physical Downlink Shared Channel (PDSCH), and the control channels may include a Physical Downlink Control Channel (PDCCH). Base station 10 transmits, to device 20, the control information using PDCCH, and the downlink data signal using PDSCH, for example.

The reference signal included in the DL signal may include, for example, at least one of a Demodulation Reference Signal (DMRS), a Phase Tracking Reference Signal (PTRS), a Channel State Information-Reference Signal (CSI-RS), a Sounding Reference Signal (SRS), and a Positioning Reference Signal (PRS) for position information. For example, the reference signal such as DMRS and PTRS is used for demodulation of a downlink data signal and is transmitted by using PDSCH.

Reception section 102 receives an uplink (UL) signal transmitted from device 20. For example, reception section 102 receives the UL signal under the control of control section 103.

Control section 103 controls communication operations of base station 10 including transmission processing in transmission section 101 and reception processing in reception section 102.

By way of example, control section 103 acquires information such as data and control information from a higher layer and outputs the data and control information to transmission section 101. Further, control section 103 outputs the data, the control information, and/or the like received from reception section 102 to the higher layer.

For example, control section 103 allocates a resource (or channel) used for DL signal transmission and reception and/or a resource used for UL signal transmission and reception, based on the signal (e.g., data, control information and/or the like) received from device 20 and/or the data, control information, and/or the like acquired from the higher layer. Information on the allocated resource(s) may be included in control information to be transmitted to device 20.

Control section 103 configures a PUCCH resource, as an example of the resource to be used for transmitting and receiving a UL signal. Information on the PUCCH configuration such as a PUCCH cell timing pattern (PUCCH configuration information) may be indicated to device 20 by RRC.

Here, transmission section 101 and reception section 102 (communication section) communicate with device 20. Control section 103 may transmit a signal for supplying power to device 20 in a section in which the communication unit does not communicate with device 20. The signal for supplying power to device 20 may be referred to as an RF signal.

Control section 103 may continuously transmit a signal for supplying power to device 20. Control section 103 may intermittently transmit a signal for supplying power to device 20. Control section 103 may transmit a signal for supplying power to device 20 in a section in which an uplink signal transmitted in a backscattering manner from device 20 is not received or in a section in which a downlink signal is not transmitted to device 20. The uplink signal may be, for example, Msg1/Msg3/MsgA. The downlink signal may be, for example, Msg2/Msg4/MsgB. Control section 103 may transmit a signal of the same type as the carrier wave for backscattering transmission to device 20 in a section in which the communication unit does not communicate with device 20.

### <Configuration of Device>

FIG. 21 is a block diagram illustrating one example of a configuration of device 20 according to the embodiment. Device 20 includes, for example, reception section 201, transmission section 202, and control section 203. Device 20 communicates with, for example, base station 10 by radio. Device 20 may be, for example, an A-IoT device.

Reception section 201 receives a DL signal transmitted from base station 10. For example, reception section 201 receives the DL signal under the control of control section 203.

Transmission section 202 transmits a UL signal to base station 10. For example, transmission section 202 transmits the UL signal under the control of control section 203.

The UL signal may include, for example, an uplink data signal and control information (e.g., UCI). For example, information on processing capability of device 20 (e.g., UE capability) may also be included. Further, the UL signal may include a reference signal.

Channels used for UL signal transmission include, for example, a data channel and a control channel. For example, the data channel includes a Physical Uplink Shared Channel (PUSCH) and the control channel includes a Physical Uplink Control Channel (PUCCH). For example, device 20 receives control information from base station 10 using PUCCH and transmits an uplink data signal using PUSCH.

The reference signal included in the UL signal may include, for example, at least one of a DMRS, PTRS, CSI-RS, SRS, and PRS. For example, the reference signals such as DMRS and PTRS are used for demodulation of an uplink data signal and are transmitted using an uplink channel (e.g., PUSCH).

Control section 203 controls communication operations of device 20 including reception processing in reception section 201 and transmission processing in transmission section 202.

By way of example, control section 203 acquires information such as data and control information from a higher layer and outputs the data and control information to transmission section 202. Further, control section 203 outputs, for example, the data, the control information, and/or the like received from reception section 201 to the higher layer.

For example, control section 203 controls transmission of information to be fed back to base station 10. The information to be fed back to base station 10 may include, for example, HARQ-ACK, Channel. State Information (CSI), or Scheduling Request (SR). The information to be fed back to base station 10 may be included in UCI. The UCI is transmitted in a PUCCH resource.

Control section 203 configures a PUCCH resource based on the configuration information (e.g., configuration information such as a PUCCH cell timing pattern and/or DCI, which are/is indicated by RRC) received from base station 10. Control section 203 determines the PUCCH resource to be used for transmitting the information to be fed back to base station 10. Under the control of control section 203, transmission section 202 transmits the information to be fed back to base station 10 in the PUCCH resource determined by control section 203.

Note that, the channels used for DL signal transmission and the channels used for UL signal transmission are not limited to the examples mentioned above. For example, the channels used for the DL signal transmission and the channels used for the UL signal transmission may include a Random Access Channel (RACH) and a Physical Broadcast Channel (PBCH). The RACH may be used for, for example, transmission of Downlink Control Information (DCI) including a Random Access Radio Network Temporary Identifier (RA-RNTI).

Here, transmission section 202 may transmit a request message related to RA. The request message related to RA may be, for example, Msg1/Msg3/MsgA. Control section 203 may retransmit the request message in a case where the response message related to RA is not normally received until a predetermined time elapses after the request message is transmitted. The response message related to RA may be, for example, Msg2/Msg4/MsgB. The predetermined time may be measured by, for example, a counter or a timer.

In a case where the response message has not been normally received, control section 203 may immediately retransmit the request message after the predetermined time elapses. In a case where the response message has not been normally received, control section 203 may configure a value used for the initial transmission of the request message in the counter or the timer and retransmit the request message. In a case where the response message has not been normally received, control section 203 may configure a random value in the counter or the timer and retransmit the request message. In a case where the response message has not been normally received, control section 203 may configure a value indicated from the network or a value defined in the specification in the counter or the timer and retransmit the request message.

Here, reception section 201 may receive a first signal for triggering the RA procedure in units of cells or a second signal for triggering the RA procedure in units of groups. The first signal may be, for example, a cell-common DL signal. The second signal may be a group-common DL signal. Control section 203 may start the RA procedure based on the reception of the first signal or the second signal.

While the RA procedure is in progress, control section 203 may not start the random access procedure even in a case where the first signal or the second signal is received. While the RA procedure is in progress, reception section 201 may not monitor the first signal or the second signal. Control section 203 may start the RA procedure based on the reception of the first signal or the second signal and the state of the radio resource control (RRC state). Control section 203 may start the RA procedure based on the reception of the first signal or the second signal and a state indicating whether device 20 is identified by the network.

Here, control section 203 may execute the RA procedure. Transmission section 202 may transmit a signal in the RA procedure by using the maximum transmission power of device 20 or the power calculated based on the reception power of the network node of the signal and the path loss. The signal in the RA procedure may be, for example, Msg1/Msg3/MsgA. The reception power in the network node may be, for example, Ptarget. The maximum transmission power may be referred to as a maximum output power.

Transmission section 202 may transmit the signal by using a smaller power of the maximum transmission power and the power. For example, transmission section 202 may transmit the signal by using the power based on Expression (11). Transmission section 202 may increase the power stepwise in accordance with the number of retransmissions of the signal.

Here, control section 203 may execute the RA procedure. Transmission section 202 may transmit a signal in the RA procedure by using a resource distinguished based on the device type of device 20.

Reception section 201 may receive information on a resource distinguished based on the device type from the network. Control section 203 may execute the RA procedure in a case where the identifier indicating the device type of device 20 is included in the downlink signal for triggering the RA procedure. The downlink signal may be, for example, a cell-common DL signal/group-common DL signal.

The present disclosure has been described, thus far. Note that the classification of items in the above description is not essential to the present disclosure, and matters described in two or more items may be used in combination as necessary, and a matter described in an item may be applied to a matter described in another item (unless inconsistent).

### <Hardware Structure and the like>

Note that the block diagrams that have been used to describe the above embodiments illustrate blocks in functional units. These functional blocks (components) may be implemented in arbitrary combinations of at least one of hardware and software. Also, the method for implementing each functional block is not particularly limited. That is, each functional block may be realized by one piece of apparatus that is physically or logically coupled, or may be realized by directly or indirectly connecting two or more physically or logically separate pieces of apparatus (e.g., via wire, wireless, or the like) and using these plurality of pieces of apparatus. The functional blocks may be implemented by combining software into the apparatus described above or the plurality of apparatuses described above.

Functions include judgment, determination, decision, calculation, computation, processing, derivation, investigation, search, confirmation, reception, transmission, output, access, resolution, selection, designation, establishment, comparison, assumption, expectation, considering, broadcasting, notifying, communicating, forwarding, configuring, reconfiguring, allocating (mapping), assigning, and the like, but function are by no means limited to these. For example, functional block (components) to implement a function of transmission may be referred to as a "transmitting section (transmitting unit)," a "transmitter," and the like. The method for implementing each component is not particularly limited as described above.

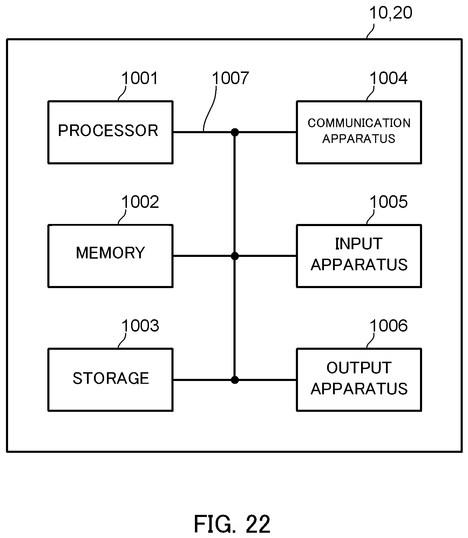

For example, the base station, the device, and the like according to an embodiment of the present disclosure may function as a computer that performs the processing of the wireless communication method of the present disclosure. FIG. 22 is a diagram illustrating an example of a hardware configuration of the base station and the device according to the embodiment. Base station 10 and device 20 may be configured as a computer apparatus including processor 1001, memory 1002, storage 1003, communication apparatus 1004, input apparatus 1005, output apparatus 1006, bus 1007, and the like in a physical manner.

Note that in the present disclosure, the words such as an apparatus, a circuit, a device, a section, a unit, and so on can be interchangeably interpreted. The hardware structure of the base station 10 and the user device 20 may be configured to include one or more of apparatuses illustrated in the drawings, or may be configured not to include part of apparatuses

Each function of base station 10 and devices 20 is implemented, for example, by allowing certain software (programs) to be read on hardware such as the processor 1001 and the memory 1002, and by allowing the processor 1001 to perform calculations to control communication via the communication apparatus 1004 and control at least one of reading and writing of data in the memory 1002 and the storage 1003.

The processor 1001 controls the whole computer by, for example, running an operating system. The processor 1001 may be configured with a central processing unit (CPU), which includes interfaces with peripheral apparatus, control apparatus, computing apparatus, a register, and so on. For example, at least part of the above-described controller 103 or controller 203, and so on may be implemented by the processor 1001.

Furthermore, the processor 1001 reads programs (program codes), software modules, data, and so on from at least one of the storage 1003 and the communication apparatus 1004, into the memory 1002, and executes various processes according to these. As for the programs, programs to allow computers to execute at least part of the operations of the above-described embodiments are used. For example, the control section 203 of device 20 may be implemented by control programs that are stored in the memory 1002 and that operate on the processor 1001, and other functional blocks may be implemented likewise. The various processes have been described to be performed by a single processor 1001. However, the processes may be performed by two or more processors 1001 simultaneously or sequentially. The processor 1001 may be implemented by one or more chips. Note that the program may be transmitted from a network via a telecommunication line.

The memory 1002 is a computer-readable recording medium, and may be constituted with, for example, at least one of a Read Only Memory (ROM), an Erasable Programmable ROM (EPROM), an Electrically EPROM (EEPROM), a Random Access Memory (RAM), and other appropriate storage media. The memory 1002 may be referred to as a "register," a "cache," a "main memory (primary storage apparatus)" and so on. The memory 1002 can store executable programs (program codes), software modules, and the like for implementing the radio communication method according to one embodiment of the present disclosure.

The storage 1003 is a computer-readable recording medium, and may be constituted with, for example, at least one of a flexible disk, a floppy (registered trademark) disk, a magneto-optical disk (e.g., a compact disc (Compact Disc ROM (CD-ROM) and so on), a digital versatile disc, a Blu-ray (registered trademark) disk), a removable disk, a hard disk drive, a smart card, a flash memory device (e.g., a card, a stick, and a key drive), a magnetic stripe, a database, a server, and other appropriate storage media. The storage 1003 may be referred to as "auxiliary storage apparatus." The above recording medium may be a database including the memory 1002 and/or the storage 1003, a server, or any other appropriate medium.

The communication apparatus 1004 is hardware (transmitting/receiving device) for allowing inter-computer communication via at least one of wired and wireless networks, and may be referred to as, for example, a "network device," a "network controller," a "network card," a "communication module," and so on. The communication apparatus 1004 may be configured to include a high frequency switch, a duplexer, a filter, a frequency synthesizer, and so on in order to realize, for example, at least one of frequency division duplex (FDD) and time division duplex (TDD). For example, the above-described transmission section 101, reception section 102, reception section 201, transmission section 202, and the like, may be realized by communication apparatus 1004.

The input apparatus 1005 is an input device that receives input from the outside (e.g., a keyboard, a mouse, a microphone, a switch, a button, a sensor, and so on). The output apparatus 1006 is an output device that allows sending output to the outside (e.g., a display, a speaker, a Light Emitting Diode (LED) lamp, and so on). Note that the input apparatus 1005 and the output apparatus 1006 may be provided in an integrated structure (e.g., a touch panel).

Furthermore, these types of apparatus, including the processor 1001, the memory 1002, and others, are connected by a bus 1007 for communicating information. The bus 1007 may be formed with a single bus or may be formed with buses that vary between pieces of apparatus.

Also, base station 10 and the devices 20 may be structured to include hardware such as a microprocessor, a digital signal processor (DSP), an Application Specific Integrated Circuit (ASIC), a Programmable Logic Device (PLD), a Field Programmable Gate Array (FPGA), and so on, and part or all of the functional blocks may be implemented by the hardware. For example, the processor 1001 may be implemented with at least one of these pieces of hardware.

### <Notification and Signaling of Information>

Notification of information is by no means limited to the embodiments described in the present disclosure, and other methods may be used as well. For example, notification of information in the present disclosure may be implemented by using physical layer signaling (e.g., downlink control information (DCI), uplink control information (UCI)), higher layer signaling (e.g., Radio Resource Control (RRC) signaling, broadcast information (master information block (MIB), system information block (SIB), and so on), Medium Access Control (MAC) signaling), and other signals or combinations of these. Also, RRC signaling may be referred to as an "RRC message," and can be, for example, an RRC connection setup message, an RRC connection reconfiguration message, and so on.

### <Application System>

The embodiments illustrated in the present disclosure may be applied to Long Term Evolution (LTE), LTE-Advanced (LTE-A), SUPER 3G, IMT-Advanced, 4th generation mobile communication system (4G), 5th generation mobile communication system (5G), 6th generation mobile communication system (6G), xth generation mobile communication system (xG (where x is, for example, an integer or a decimal)), Future Radio Access (FRA), New Radio (NR), New radio access (NX), Future generation radio access (FX), W-CDMA (registered trademark), Global System for Mobile communications (GSM (registered trademark)), CDMA 2000, Ultra Mobile Broadband (UMB), IEEE 802.11 (Wi-Fi (registered trademark)), IEEE 802.16 (WiMAX (registered trademark)), IEEE 802.20, Ultra-WideBand (UWB), Bluetooth (registered trademark), systems that use other adequate radio communication methods, next-generation systems that are enhanced, modified, created, or defined based on these, and the like. A plurality of systems may be combined (e.g., a combination of LTE or LTE-A and 5G, and the like) for application.

### <Processing Procedure and the like>

The order of processes, sequences, flowcharts, and so on that have been used to describe the aspects/embodiments in the present disclosure may be re-ordered as long as inconsistencies do not arise. For example, although various methods have been illustrated in the present disclosure with various components of steps in exemplary orders, the specific orders that are illustrated herein are by no means limiting.

### <Operation of Base Station>

Operations which have been described in the present disclosure to be performed by a base station may, in some cases, be performed by an upper node of the base station. In a network including one or a plurality of network nodes with base stations, it is clear that various operations that are performed to communicate with terminals can be performed by base stations, one or more network nodes (e.g., Mobility Management Entities (MMEs), Serving-Gateways (S-GWs), and so on may be possible, but these are not limiting) other than base stations, or combinations of these. According to the above, a case is described in which there is a single network node other than the base station. However, a combination of multiple other network nodes may be considered (e.g., MME and S-GW).

### <Direction of Input and Output>

The information or signals described in this disclosure may be output from a higher layer (or lower layer) to a lower layer (or higher layer). The information or signals may be input or output through multiple network nodes.

### <Handling of Input and Output Information and the like>

The input or output information may be stored in a specific location (e.g., memory) or managed using management tables. The input or output information may be overwritten, updated, or added. The information that has been output may be deleted. The information that has been input may be transmitted to another apparatus.

### <Determination Method>

A decision or a determination in an embodiment of the present invention may be realized by a value (0 or 1) represented by one bit, by a boolean value (true or false), or by comparison of numerical values (e.g., comparison with a predetermined values).

### <Variations and the like of Aspects>

Each aspect/embodiment described in the present specification may be used independently, may be used in combination, or may be used by switching according to operations. Further, notification (transmission/reporting) of predetermined information (e.g., notification (transmission/reporting) of "X") is not limited to an explicit notification (transmission/reporting), and may be performed by an implicit notification (transmission/reporting) (e.g., by not performing notification (transmission/reporting) of the predetermined information).

As described above, the present invention has been described in detail. It is apparent to a person skilled in the art that the present invention is not limited to one or more embodiments of the present invention described in the present specification. Variations, alternatives, replacements, etc., of the present invention may be possible without departing from the subject matter and the scope of the present invention defined by the descriptions of claims. Therefore, the descriptions of the present specification are for illustrative purposes only and are not intended to be limitations to the present invention.

### <Software>

Software should be broadly interpreted to mean, whether referred to as software, firmware, middle-ware, microcode, hardware description language, or any other name, instructions, instruction sets, codes, code segments, program codes, programs, subprograms, software modules, applications, software applications, software packages, routines, subroutines, objects, executable files, executable threads, procedures, functions, and the like.

Further, software, instructions, information, and the like may be transmitted and received via a transmission medium. For example, in the case where software is transmitted from a website, server, or other remote source using at least one of wired line technologies (such as coaxial cable, fiber optic cable, twisted pair, digital subscriber line (DSL), etc.) or wireless technologies (infrared, microwave, etc.), at least one of these wired line technologies or wireless technologies is included within the definition of the transmission medium.

### <Information and Signals>

Information, a signal, or the like, described in the present specification may be represented by using any one of various different technologies. For example, data, an instruction, a command, information, a signal, a bit, a symbol, a chip, or the like, described throughout the present application, may be represented by a voltage, an electric current, electromagnetic waves, magnetic fields, a magnetic particle, optical fields, a photon, or a combination thereof.

Note that a term used in the present specification and/or a term required for understanding of the present specification may be replaced by a term having the same or similar meaning. For example, a channel and/or a symbol may be a signal (signaling). Further, a signal may be a message. Further, the component carrier (CC) may be referred to as a carrier frequency, cell, frequency carrier, or the like.

### <System and Network>

As used in the present disclosure, the terms "system" and "network" are used interchangeably.

### <Names of Parameters and Channels>

Further, the information, parameters, and the like, described in the present disclosure may be expressed using absolute values, relative values from predetermined values, or they may be expressed using corresponding different information. For example, a radio resource may be what is indicated by an index.

The names used for the parameters described above are not used as limitations. Further, the mathematical equations using these parameters may differ from those explicitly disclosed in the present disclosure. Because the various channels (e.g., PUCCH, PDCCH) and information elements may be identified by any suitable names, the various names assigned to these various channels and information elements are not used as limitations.

### <Base Station>

In the present disclosure, the terms such as a "base station (BS)," a "radio base station," a "fixed station," a "NodeB," an "eNB (eNodeB)," a "gNB (gNodeB)," an "access point," a "transmission point," a "reception point," a "transmission/reception point," a "panel," a "cell," a "sector," a "cell group," a "carrier," a "component carrier," and so on can be used interchangeably. The base station may be referred to as the terms such as a "macro cell," a "small cell," a "femto cell," a "pico cell," and so on

A base station can accommodate one or a plurality of (e.g., three) cells. When a base station accommodates a plurality of cells, the entire coverage area of the base station can be partitioned into multiple smaller areas, and each smaller area can provide communication services through base station subsystems (e.g., indoor small base stations (Remote Radio Heads (RRHs))). The term "cell" or "sector" refers to part of or the entire coverage area of at least one of a base station and a base station subsystem that provides communication services within this coverage.

In the present disclosure, transmitting information to the terminal by the base station may be referred to as instructing the terminal to perform any control and/or operation based on the information by the base station.

### <Mobile Station>

In the present disclosure, the terms "mobile station (MS)," "user terminal," "user equipment (UE)," and "terminal" may be used interchangeably.

A mobile station may be referred to as a "subscriber station," "mobile unit," "subscriber unit," "wireless unit," "remote unit," "mobile device," "wireless device," "wireless communication device," "remote device," "mobile subscriber station," "access terminal," "mobile terminal," "wireless terminal," "remote terminal," "handset," "user agent," "mobile client," "client," or some other appropriate terms in some cases.

### <Base Station/Mobile Station>

At least one of a base station and a mobile station may be referred to as a "transmitting apparatus," a "receiving apparatus," a "communication apparatus," and so on. Note that at least one of a base station and a mobile station may be a device mounted on a moving object or a moving object itself, and so on. The moving object is a movable object with any moving speed, and naturally a case where the moving object is stopped is also included. Examples of the moving object include a vehicle, a transport vehicle, an automobile, a motorcycle, a bicycle, a connected car, a loading shovel, a bulldozer, a wheel loader, a dump truck, a fork lift, a train, a bus, a trolley, a rickshaw, a ship and other watercraft, an airplane, a rocket, a satellite, a drone, a multicopter, a quadcopter, a balloon, and an object mounted on any of these, but these are not restrictive. The moving object may be a moving object that autonomously travels based on a direction for moving. The moving object may be a vehicle (e.g., a car, an airplane, and the like), may be a moving object which moves unmanned (e.g., a drone, an automatic operation car, and the like), or may be a robot (a manned type or unmanned type). Note that at least one of a base station and a mobile station also includes an apparatus which does not necessarily move during communication operation. For example, at least one of a base station and a mobile station may be an Internet of Things (IoT) device such as a sensor.

Furthermore, the base station in the present disclosure may be interpreted as a terminal. For example, an embodiment of the present disclosure may be applied to the structure that replaces a communication between a base station and a terminal with a communication between a plurality of terminals (e.g., which may be referred to as "Device-to-Device (D2D)," "Vehicle-to-Everything (V2X)," and the like). In this case, devices 20 may have the functions of the base stations 10 described above. The words such as "uplink" and "downlink" may be interpreted as the words corresponding to the terminal-to- terminal communication (e.g., "sidelink"). For example, an uplink channel, a downlink channel and so on may be interpreted as a sidelink channel.

Likewise, the terminal in the present disclosure may be interpreted as base station. In this case, the base station 10 may have the functions of device 20 described above.

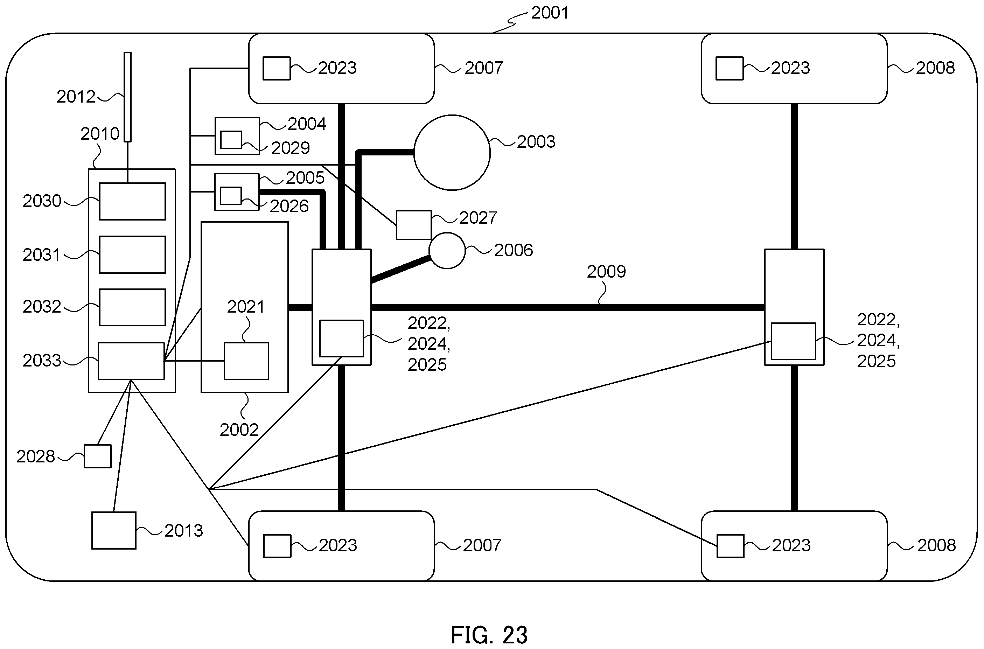

FIG. 23 illustrates an example of a configuration of a vehicle 2001. As illustrated in FIG. 23, the vehicle 2001 includes a drive section 2002, a steering section 2003, an accelerator pedal 2004, a brake pedal 2005, a shift lever 2006, a front wheel 2007, a rear wheel 2008, an axle 2009, an electronic control unit 2010, various sensors 2021-2029, an information service section 2012, and a communication module 2013. The aspects/embodiments described in the present disclosure may be applied to a communication apparatus mounted in the vehicle 2001, and may be applied to, for example, the communication module 2013.

The drive section 2002 may include, for example, an engine, a motor, and a hybrid of an engine and a motor. The steering section 2003 includes at least a steering wheel and is configured to steer at least one of the front wheel or the rear wheel, based on the operation of the steering wheel operated by the user.

The electronic control unit 2010 includes a microprocessor 2031, a memory (ROM, RAM) 2032, and a communication port (IO port) 2033. The electronic control unit 2010 receives signals from the various sensors 2021-2029 provided in the vehicle 2001. The electronic control unit 2010 may be referred to as an ECU (Electronic control unit).

The signals from the various sensors 2021 to 2029 include a current signal from a current sensor 2021 which senses the current of the motor, a front or rear wheel rotation signal acquired by a revolution sensor 2022, a front or rear wheel pneumatic signal acquired by a pneumatic sensor 2023, a vehicle speed signal acquired by a vehicle speed sensor 2024, an acceleration signal acquired by an acceleration sensor 2025, a stepped-on accelerator pedal signal acquired by an accelerator pedal sensor 2029, a stepped-on brake pedal signal acquired by a brake pedal sensor 2026, an operation signal of a shift lever acquired by a shift lever sensor 2027, and a detection signal, acquired by an object detection sensor 2028, for detecting an obstacle, a vehicle, a pedestrian, and the like.

The information service section 2012 includes various devices for providing (outputting) various kinds of information such as driving information, traffic information, and entertainment information, including a car navigation system, an audio system, a speaker, a television, and a radio, and one or more ECUs controlling these devices. The information service section 2012 provides various types of multimedia information and multimedia services to the occupants of the vehicle 2001 by using information obtained from the external device through the communication module 2013 or the like.

The information service section 2012 may include an input device (e.g., a keyboard, a mouse, a microphone, a switch, a button, a sensor, a touch panel, and the like) for receiving input from the outside, or may include an output device (e.g., a display, a speaker, an LED lamp, a touch panel, and the like) for implementing output to the outside.

A driving support system section 2030 includes: various devices for providing functions of preventing accidents and reducing driver's operating loads such as a millimeter wave radar, a LiDAR (Light Detection and Ranging), a camera, a positioning locator (e.g., GNSS, etc.), map information (e.g., high definition (HD) map, autonomous vehicle (AV) map, etc.), a gyro system (e.g., IMU (Inertial Measurement Unit), INS (Inertial Navigation System), etc.), an AI (Artificial Intelligence) chip, an AI processor; and one or more ECUs controlling these devices. Further, the driving support system section 2030 transmits and receives various types of information via the communication module 2013 to realize a driving support function or an autonomous driving function.

The communication module 2013 may communicate with the microprocessor 2031 and components of the vehicle 2001 via a communication port. For example, the communication module 2013 transmits and receives data via a communication port 2033, to and from the drive section 2002, the steering section 2003, the accelerator pedal 2004, the brake pedal 2005, the shift lever 2006, the front wheel 2007, the rear wheel 2008, the axle 2009, the microprocessor 2031 and the memory (ROM, RAM) 2032 in the electronic control unit 2010, and sensors 2021 to 29 provided in the vehicle 2001.

The communication module 2013 is a communication device that can be controlled by the microprocessor 2031 of the electronic control unit 2010 and that is capable of communicating with external devices. For example, various kinds of information are transmitted to and received from external devices through radio communication. The communication module 2013 may be internal to or external to the electronic control unit 2010. The external devices may include, for example, a base station, a mobile station, or the like.

The communication module 2013 may transmit at least one of signals from the various sensors 2021 to 2029 described above input to the electronic control unit 2010, information obtained based on the signals, and information based on an input from the outside (a user) obtained via the information service section 2012, to the external apparatus via radio communication. The electronic control unit 2010, the various sensors 2021 to 2029, the information service section 2012, and the like may be referred to as input sections that receive input. For example, the PUSCH transmitted by the communication module 2013 may include information based on the input.

The communication module 2013 receives various types of information (traffic information, signal information, inter-vehicle information, etc.) transmitted from the external devices and displays the received information on the information service section 2012 provided in the vehicle 2001. The information service section 2012 may be referred to as an output section that outputs information (e.g., outputs information to devices, such as a display and a speaker, based on the PDSCH received by the communication module 2013 (or data/information decoded from the PDSCH)).

Further, the communication module 2013 stores the various types of information received from the external devices in the memory 2032 available to the microprocessor 2031. Based on the information stored in the memory 2032, the microprocessor 2031 may control the drive section 2002, the steering section 2003, the accelerator pedal 2004, the brake pedal 2005, the shift lever 2006, the front wheel 2007, the rear wheel 2008, the axle 2009, the sensors 2021-2029 etc., mounted in the vehicle 2001.

### <Meaning and Interpretation of Terms>

As used herein, the term "determining" may encompasses a wide variety of actions. For example, "determining" may be regarded as judging, calculating, computing, processing, deriving, investigating, looking up or search inquiry (e.g., looking up in a table, a database or another data structure), ascertaining and the like. Also, "determining" may be regarded as receiving (e.g., receiving information), transmitting (e.g., transmitting information), inputting, outputting, accessing (e.g., accessing data in a memory) and the like. Also, "determining" may be regarded as resolving, selecting, choosing, establishing, comparing, and the like. That is, "determining" may be regarded as a certain type of action related to determining. Also, "determining" may be replaced with "assuming," "expecting," "considering," and the like.

The term "connected" or "coupled" or any variation thereof means any direct or indirect connection or connection between two or more elements and may include the presence of one or more intermediate elements between the two elements "connected" or "coupled" with each other. The coupling or connection between the elements may be physical, logical, or a combination thereof. For example, "connection" may be read as "access". As used in the present disclosure, the two elements may be thought of as being "connected" or "coupled" to each other using at least one of the one or more wires, cables, or printed electrical connections and, as a number of non-limiting and non-inclusive examples, electromagnetic energy having wavelengths in the radio frequency region, the microwave region, and the light (both visible and invisible) region.

### <Reference Signal>

A reference signal may be abbreviated as an "RS," and may be referred to as a "pilot" and so on, depending on which standard applies.

### <Meaning of "Based On">

The phrase "based on" (or "on the basis of") as used in the present disclosure does not mean "based only on" (or "only on the basis of"), unless otherwise specified. In other words, the phrase "based on" (or "on the basis of") means both "based only on" and "based at least on" ("only on the basis of" and "at least on the basis of").

### <"First" and "Second">

Reference to elements with designations such as "first," "second," and so on as used in the present disclosure does not generally limit the quantity or order of these elements. These designations may be used in the present disclosure only for convenience, as a method for distinguishing between two or more elements. Thus, reference to the first and second elements does not imply that only two elements may be employed, or that the first element must precede the second element in some way.

### <Means>

"Means" included in the configuration of each of the above apparatuses may be replaced by "parts", "circuits", "devices", etc.

### <Open Form>

In the case where the terms "include", "including" and variations thereof are used in the present disclosure, these terms are intended to be comprehensive in the same way as the term "comprising". Further, the term "or" used in the present specification is not intended to be an "exclusive or".

### <Time Units such as TTI, Frequency Units such as RB, and Radio Frame Configuration>

A radio frame may be constituted of one or a plurality of periods (frames) in the time domain. Each of one or a plurality of periods (frames) constituting a radio frame may be referred to as a "subframe." Furthermore, a subframe may be constituted of one or a plurality of slots in the time domain. A subframe may be a fixed time length (e.g., 1 ms) independent of numerology.

Numerology may be a communication parameter applied to at least one of transmission and reception of a certain signal or channel. For example, numerology may indicate at least one of a subcarrier spacing (SCS), a bandwidth, a symbol length, a cyclic prefix length, a transmission time interval (TTI), the number of symbols per TTI, a radio frame structure, a specific filter processing performed by a transceiver in the frequency domain, a specific windowing processing performed by a transceiver in the time domain, and so on.

A slot may be constituted of one or a plurality of symbols in the time domain (Orthogonal Frequency Division Multiplexing (OFDM) symbols, Single Carrier Frequency Division Multiple Access (SC-FDMA) symbols, and so on). Furthermore, a slot may be a time unit based on numerology.

A slot may include a plurality of mini-slots. Each mini-slot may be constituted of one or a plurality of symbols in the time domain. A mini-slot may be referred to as a "sub-slot." A mini-slot may be constituted of symbols less than the number of slots. A PDSCH (or PUSCH) transmitted in a time unit larger than a mini-slot may be referred to as "PDSCH (PUSCH) mapping type A." A PDSCH (or PUSCH) transmitted using a mini-slot may be referred to as "PDSCH (PUSCH) mapping type B."

A radio frame, a subframe, a slot, a mini-slot, and a symbol all express time units in signal communication. A radio frame, a subframe, a slot, a mini-slot, and a symbol may each be called by other applicable terms. Note that time units such as a frame, a subframe, a slot, mini-slot, and a symbol in the present disclosure may be interchangeably interpreted.

For example, one subframe may be referred to as a "Transmission Time Interval (TTI)," a plurality of consecutive subframes may be referred to as a "TTI," or one slot or one mini-slot may be referred to as a "TTI." In other words, at least one of a subframe and a TTI may be a subframe (1 ms) in existing LTE, may be a period shorter than 1 ms (e.g., 1 to 13 symbols), or may be a period longer than 1 ms. Note that a unit expressing TTI may be referred to as a "slot," a "mini-slot," or the like, instead of a "subframe."

Here, a TTI refers to the minimum time unit of scheduling in radio communication, for example. For example, in LTE systems, a base station performs, for user terminals, scheduling of allocating radio resources (such as a frequency bandwidth and transmit power available for each user terminal) in TTI units. Note that the definition of the TTI is not limited to this.

The TTI may be a transmission time unit for channel-encoded data packets (transport blocks), code blocks, codewords, or the like, or may be a unit of processing in scheduling, link adaptation, or the like. Note that, when a TTI is given, a time interval (e.g., the number of symbols) to which transport blocks, code blocks, codewords, or the like are actually mapped may be shorter than the TTI.

Note that, in the case where one slot or one mini-slot is referred to as a TTI, one or more TTIs (that is, one or more slots or one or more mini-slots) may be the minimum time unit of scheduling. Furthermore, the number of slots (the number of mini-slots) constituting the minimum time unit of the scheduling may be controlled.

A TTI having a time length of 1 ms may be referred to as a "normal TTI" (TTI in 3GPP Rel. 8 to Rel. 12), a "long TTI," a "normal subframe," a "long subframe," a "slot," or the like. A TTI that is shorter than a normal TTI may be referred to as a "shortened TTI," a "short TTI," a "partial or fractional TTI," a "shortened subframe," a "short subframe," a "mini-slot," a "sub-slot," a "slot" and so on.

Note that a long TTI (e.g., a normal TTI, a subframe, or the like) may be interpreted as a TTI having a time length exceeding 1 ms, and a short TTI (e.g., a shortened TTI or the like) may be interpreted as a TTI having a TTI length shorter than the TTI length of a long TTI and equal to or longer than 1 ms.

A resource block (RB) is the unit of resource allocation in the time domain and the frequency domain, and may include one or a plurality of consecutive subcarriers in the frequency domain. The number of subcarriers included in an RB may be the same regardless of numerology, and, for example, may be 12. The number of subcarriers included in an RB may be determined based on numerology.

An RB may include one or a plurality of symbols in the time domain, and may be one slot, one mini-slot, one subframe, or one TTI in length. One TTI, one subframe, and so on each may be constituted of one or a plurality of resource blocks.

Note that one or a plurality of RBs may be referred to as a "physical resource block (Physical RB (PRB))," a "sub-carrier group (SCG)," a "resource element group (REG),"a "PRB pair," an "RB pair" and so on.

Furthermore, a resource block may be constituted of one or a plurality of resource elements (REs). For example, one RE may correspond to a radio resource field of one subcarrier and one symbol.

A bandwidth part (BWP) (which may be referred to as a "fractional bandwidth," and so on) may represent a subset of contiguous common resource blocks (common RBs) for certain numerology in a certain carrier. Here, a common RB may be specified by an index of the RB based on the common reference point of the carrier. A PRB may be defined by a certain BWP and may be numbered in the BWP.

The BWP may include a UL BWP (BWP for UL) and a DL BWP (BWP for DL). One or a plurality of BWPs may be configured in one carrier for a UE.

At least one of configured BWPs may be active, and a UE may not need to assume to transmit/receive a certain signal/channel outside the active BWP(s). Note that a "cell," a "carrier," and so on in the present disclosure may be interpreted as a "BWP".

Note that the above-described structures of radio frames, subframes, slots, mini-slots, symbols, and so on are merely examples. For example, structures such as the number of subframes included in a radio frame, the number of slots per subframe or radio frame, the number of mini-slots included in a slot, the numbers of symbols and RBs included in a slot or a mini-slot, the number of subcarriers included in an RB, the number of symbols in a TTI, the symbol length, the cyclic prefix (CP) length, and so on can be variously changed.

### <Maximum Transmit Power>

The "maximum transmit power" described in the present disclosure may mean a maximum value of the transmit power, the nominal UE maximum transmit power, or the rated UE maximum transmit power.

### <Article>

In the present disclosure, where an article is added by translation, for example "a", "an", and "the", the disclosure may include that the noun following these articles is plural.

### <"Different">

In this disclosure, the term "A and B are different" may mean "A and B are different from each other." Note that the term "A and B are different" may mean "A and B are different from C." Terms such as "separated" or "combined" may be interpreted in the same way as the above-described "different."

### Industrial Applicability

An aspect of the present disclosure is useful for radio communication systems.

### Reference Signs List

10 Base station
20 Device
101, 202 Transmission section
102, 201 Reception section
103, 203 Control section

## Claims

1. A device having lower complexity than a Narrow Band-Internet of Things (NB-IoT) device, the device comprising:
a control section that executes a random access procedure; and
a transmission section that transmits a signal in the random access procedure, using a maximum transmission power of the device or a power calculated based on a reception power and a path loss of the signal in a network node.

2. The device according to claim 1, wherein, the transmission section transmits the signal, using a smaller one of the maximum transmission power and the power.

3. The device according to claim 1, wherein, the transmission section increases the power stepwise in accordance with a number of retransmissions of the signal.

4. A device having lower complexity than a Narrow Band-Internet of Things (NB-IoT) device, the device comprising:
a control section that executes a random access procedure; and
a transmission section that transmits a signal in the random access procedure, using a resource distinguished based on a device type of the device.

5. The device according to claim 4, further comprising a reception section that receives information on the resource from a network.

6. The device according to claim 4, wherein, the control section executes the random access procedure in a case where an identifier indicating the device type of the device is included in a downlink signal triggering the random access procedure.
